# EUROPÄISCHE PATENTSCHRIFT

(11) **EP 3 152 070 B1**
(45) Veröffentlichungstag und Bekanntmachung des Hinweises auf die Patenterteilung: **15.11.2023**
(21) Anmeldenummer: 15725562.1
(22) Anmeldetag: 20.05.2015
(51) Int. Cl.: B60D 1/06, B60D 1/62

(54) **ANHÄNGEKUPPLUNG**
TRAILER COUPLING
ACCOUPLEMENT D'ATTELAGE

(30) Priorität: 05.06.2014 DE 102014107967
(43) Veröffentlichungstag der Anmeldung: 12.04.2017
(73) Patentinhaber: ACPS Automotive GmbH, 74379 Ingersheim (DE)
(72) Erfinder: GENTNER, Wolfgang, 71711 Steinheim (DE); KADNIKOV, Aleksej, 71229 Leonberg (DE); RIMMELSPACHER, Bernhard, 76287 Rheinstetten (DE)
(74) Vertreter: Hoeger, Stellrecht & Partner Patentanwälte mbB
(86) Internationale Anmeldenummer: PCT/EP2015/061123
(87) Internationale Veröffentlichungsnummer: WO 2015/185358

(56) Entgegenhaltungen:
- EP-A1- 2 676 820
- EP-A1- 2 907 681
- EP-A2- 2 363 307
- EP-A2- 2 366 563
- DE-A1-102010 033 641
- DE-A1-102013 201 057

## Beschreibung

Die Erfindung betrifft eine Anhängekupplung für Kraftfahrzeuge umfassend einen Kugelhals, eine fahrzeugseitige Lagereinheit, mit welcher ein erstes Ende des Kugelhalses verbunden ist, und eine Kupplungskugel, welche mit einem zweiten Ende des Kugelhalses verbunden ist und welche einen Hohlraum für ein Sensorsystem aufweist.

Derartige Anhängekupplungen sind aus dem Stand der Technik bekannt. Die EP 2 676 820 A1 offenbart eine gattungsgemäße Anhhängekupplung.

Bei diesen besteht jedoch das Problem, eine geeignete Lösung für den Aufbau der Kupplungskugel zu finden, damit diese die notwendige Stabilität aufweist und das Sensorsystem zutreffend funktioniert.

Die eingangs genannten Aufgabe wird erfindungsgemäß durch die Merkmale des Anspruchs 1 gelöst.

Unter einer mehrdimensionalen Erfassung ist eine zwei- oder eine dreidimensionale Erfassung zu verstehen, die in einem vor dem Magnetfeldsensor liegenden Raum erfolgt.

Eine zweidimensionale Erfassung erfolgt daher in einer an dem Magnetfeldsensor angrenzenden Fläche, die vorzugsweise quer, insbesondere senkrecht, zur Kugelmittelachse verläuft.

Eine dreidimensionale Erfassung erfolgt in einem an dem Magnetfeldsensor angrenzenden Raum in allen Raumrichtungen.

Prinzipiell könnte ein derartiger Magnetfeldsensor auch Magnete im Umgebungsraum erfassen.

Ferner ist erfindungsgemäß in dem Hohlraum mindestens ein Permanentmagnet angeordnet, dessen Magnetfeld den Magnetfeldsensor durchflutet, wobei in diesem Fall das Anordnen eines magnetisierbaren Körpers in dem Umgebungsraum dazu führt, dass Verzerrungen des Magnetfeldes auftreten, die wiederum von dem Magnetfeldsensor erfasst werden, wobei ebenfalls eine mehrdimensionale Erfassung der Verzerrungen des Magnetfeldes wiederum eine mehrdimensionale Überwachung des Umgebungsraums hinsichtlich in diesem angeordneter magnetisierbare Körper ermöglicht.

Ferner ist vorzugsweise vorgesehen, dass der Magnetfeldsensor auf einer in dem Hohlraum angeordneten Schaltungsplatine montiert ist und dass auf der Schaltungsplatine elektronische Baugruppen zum Betrieb und zur Signalverarbeitung des mindestens einen Magnetfeldsensors angeordnet sind.

Der Vorteil dieser Lösung ist darin zu sehen, dass damit die elektronischen Baugruppen, wie beispielsweise Prozessoren oder andere Einheiten, die zum Betrieb des Magnetfeldsensors und zur Auswertung der Signale desselben erforderlich sind, unmittelbar in dem Hohlraum in der Kupplungskugel angeordnet werden können und somit das Sensorsystem als eine sehr kompakte Einheit, die in den Hohlraum der Kupplungskugel integriert werden kann, aufgebaut werden kann.

Um gegebenenfalls die räumliche Auflösung zu verbessern, ist ferner vorgesehen, dass mindestens zwei, noch besser mindestens drei, mehrdimensionale Magnetfeldsensoren vorgesehen sind.

Eine vorteilhafte Lösung sieht vor, dass die Kupplungskugel ein Kugelbasissegment aufweist, das über einen Kugelansatz mit dem zweiten Ende des Kugelhalses verbunden ist und ein auf dem Kugelbasissegment angeordnetes und dieses zur Kupplungskugel ergänzendes Kugelabschlusssegment aufweist, dass innerhalb der Kupplungskugel zwischen dem Kugelbasissegment und dem Kugelabschlusssegment ein Hohlraum vorhanden ist, dass in dem Hohlraum ein Sensorsystem angeordnet ist, welches durch eine durch das Kugelabschlusssegment hindurch erfolgende berührungslose Wechselwirkung mit einer an der Kupplungskugel angreifenden Zugkugelkupplung Drehstellungen der Zugkugelkupplung relativ zu einer Kugelmittelachse der Kupplungskugel erfasst.

Der Vorteil dieser Lösung ist darin zu sehen, dass durch die Aufteilung der Kupplungskugel in ein Kugelbasissegment und ein Kugelabschlusssegment eine einfache Möglichkeit besteht, die Kupplungskugel stabil aufzubauen und durch die Aufteilung in das Kugelbasissegment und das Kugelabschlusssegment eine einfach Möglichkeit zur Anordnung des Sensorsystems in dem Hohlraum geschaffen ist.

Insbesondere ist dabei die Kupplungskugel so ausgebildet, dass sie eine geschlossene, frei von Durchbrüchen ausgebildete Oberfläche aufweist, die sich zwischen einer durch den Übergang von der Kupplungskugel zum Kugelansatz definierten unteren Begrenzungsebene der Kupplungskugel und einer durch eine Abflachung der Kupplungskugel definierten oberen Begrenzungsebene der Kupplungskugel erstreckt.

Das heißt, dass zwischen der unteren und der oberen Begrenzungsebene die Kupplungskugel keine Öffnungen aufweist, über welche eine Verbindung zu dem Hohlraum in der Kupplungskugel besteht, sondern dass die Kupplungskugel zwischen der unteren Begrenzungsebene und der oberen Begrenzungsebene eine geschlossene Oberfläche bildet.

Insbesondere ist dabei vorgesehen, dass das Kugelabschlusssegment sich bis zu der Abflachung der Kupplungskugel erstreckt.

Vorzugsweise bildet dabei das Kugelabschlusssegment die Abflachung der Kupplungskugel.

Ferner ist zweckmäßigerweise vorgesehen, dass das Kugelabschlusssegment eine im Bereich der Abflachung der Kupplungskugel angeordnete Schraubenkopfaufnahme aufweist, wobei die Schraubenkopfaufnahme zur Aufnahme eines Schraubenkopfes dient, welcher beispielsweise das Kugelabschlusssegment mit dem Kugelbasissegment verbindet.

Eine besonders günstige Lösung sieht dabei vor, dass das Kugelabschlusssegment das Kugelbasissegment auf einer dem Kugelansatz abgewandten Seite in der Art einer Kappe übergreift.

Um einen Zugang zu dem Sensorsystem in dem Hohlraum in der Kupplungskugel zu schaffen, ist vorzugsweise vorgesehen, dass ein durch den Kugelansatz verlaufender Zugangskanal zu dem Hohlraum geführt ist.

Vorteilhafterweise ist dabei vorgesehen, dass der Zugangskanal der einzige Zugangskanal zu dem Hohlraum in der Kupplungskugel ist.

Hinsichtlich der Verbindung des Kugelbasissegments mit dem Kugelansatz sind die unterschiedlichsten Lösungen denkbar.

Eine vorteilhafte Lösung sieht vor, dass das Kugelbasissegment und der Kugelansatz ein einstückiges Teil bilden.

Für die Stabilität der Verbindung zwischen dem Kugelbasissegment und dem Kugelhals ist vorzugsweise vorgesehen, dass das Kugelbasissegment, der Kugelansatz und der Kugelhals ein einstückiges Teil bilden.

Da die Kupplungskugel beim Betrieb mit einem Anhänger mit einer an dieser angreifenden Zugkugelkupplung oder auch beim Tragen eines Gepäck- oder Fahrradträgers, insbesondere durch die wirkenden Zugkräfte und Drehmomente, hohen mechanischen Belastungen ausgesetzt ist, ist eine stabile Verbindung zwischen dem Kugelbasissegment und dem Kugelabschlusssegment von Vorteil.

Aus diesem Grund ist zweckmäßigerweise vorgesehen, dass das Kugelbasissegment und das Kugelabschlusssegment miteinander verbundene Formschlusselemente aufweisen.

Insbesondere sind die Formschlusselemente so ausgebildet, dass diese das Kugelabschlusssegment bezogen auf eine Drehung um die Kugelmittelachse drehfest relativ zum Kugelbasissegment fixieren.

Der Vorteil dieser Lösung ist insbesondere der, dass dadurch Torsionsmomente, die auf das Kugelabschlusssegment wirken, vorteilhaft auf das Kugelbasissegment übertragen werden können und somit nicht zu einem Lösen der Verbindung zwischen dem Kugelbasissegment und Kugelabschlusssegment führen können.

Die Formschlusselemente können dabei auf unterschiedlichste Art und Weise ausgebildet sein.

Eine vorteilhafte Lösung sieht vor, dass die zwischen dem Kugelbasissegment und dem Kugelabschlusssegment wirkenden Formschlusselemente aneinander angreifende Formschlusselemente sind.

Beispielsweise können dabei die Formschlusselemente des Kugelbasissegments und des Kugelabschlusssegments verzahnt ineinandergreifen.

Eine derartige Verzahnung könnte beispielsweise eine bezogen auf die Kugelmittelachse axiale Verzahnung sein.

Für die drehfeste Verbindung hat es sich jedoch als besonders vorteilhaft erwiesen, wenn die Formschlusselemente radial zur Kugelmittelachse verzahnt ineinandergreifen.

Eine andere vorteilhafte Lösung sieht vor, dass das Kugelbasissegment und das Kugelabschlusssegment durch ein durch Umformen hergestellten Formschluss miteinander verbunden sind.

Das heißt, dass der Formschluss nicht durch ineinandergesteckte Formschlusselemente erfolgt, sondern dass der Formschluss durch Umformen entsteht.

Vorzugsweise ist dabei vorgesehen, dass der Formschluss zwischen dem Kugelbasissegment und dem Kugelabschlusssegment durch Umformen von mindestens einem von zwei aneinander angrenzenden Bereichen des Kugelbasissegments und des Kugelabschlusssegments erfolgt.

Eine besonders zweckmäßige Ausführungsform sieht vor, dass der Formschluss zwischen dem Kugelbasissegment und dem Kugelabschlusssegment durch Umformen eines Randbereichs des Kugelabschlusssegments und des Kugelbasissegments erfolgt.

Dabei ist vorzugsweise vorgesehen, dass der Randbereich des Kugelbasissegments oder des Kugelabschlusssegments mindestens einen radialen, sich in Richtung der Kugelmittelachse erstreckenden Bereich aufweist, welcher in eine Eintiefung des jeweils anderen Segments eingeformt ist.

Bei allen bislang beschriebenen Ausführungsbeispielen der erfindungsgemäßen Anhängekupplung ist vorzugsweise vorgesehen, dass das Kugelabschlusssegment aus einem nicht magnetisierbaren oder nicht magnetischen Material hergestellt ist.

Ein derartiges nicht magnetisierbares Material könnte beispielsweise Kunststoff oder auch Aluminium sein.

Besonders vorteilhaft ist es jedoch, wenn das nicht magnetisierbare Material eine Edelstahllegierung ist.

Ein derartiges nicht magnetisierbares Material lässt sich beispielsweise durch eine magnetische Permeabilität µ beschreiben, die im Bereich von 1 bis 1,3, noch besser im Bereich von 1 bis 1,2, vorzugsweise im Bereich von 1 bis 1,1 und noch besser im Bereich von 1 bis 1,06 liegt.

Ein derartiges nicht magnetisierbares Material hat den großen Vorteil, dass sich dadurch insbesondere eine magnetische Wechselwirkung zwischen dem Sensorsystem und dem Umgebungsraum der Kupplungskugel ausbilden lässt, wobei diese magnetische Wechselwirkung entweder dazu ausgenutzt werden kann, ein von dem Sensorsystem ausgehendes Magnetfeld zu deformieren oder dazu ausgenutzt werden kann, ein von dem Sensorsystem ausgehendes Magnetfeld zur drehfesten Kopplung eines Drehpositionserfassungselements des Sensorsystems mit der Zugkugelkupplung zu erreichen.

Weitere Merkmale und Vorteil der Erfindung sind Gegenstand der nachfolgenden Beschreibung sowie der zeichnerischen Darstellung einiger Ausführungsbeispiele.

In der Zeichnung zeigen:
- Fig. 1: eine schematische Seitenansicht eines Kraftfahrzeugs mit einer Anhängekupplung;
- Fig. 2: eine Darstellung der am Fahrzeug montierbaren Anhängekupplung;
- Fig. 3: ein erstes Ausführungsbeispiel eines Kugelhalses einer erfindungsgemäßen Anhängekupplung mit Kupplungskugel;
- Fig. 4: einen Schnitt längs Linie 4-4 in Fig. 3;
- Fig. 5: einen Schnitt längs Linie 5-5 in Fig. 4;
- Fig. 6: eine Darstellung ähnlich Fig. 4 eines zweiten Ausführungsbeispiels einer erfindungsgemäßen Anhängekupplung;
- Fig. 7: eine Darstellung ähnlich Fig. 5 des zweiten Ausführungsbeispiels der erfindungsgemäßen Anhängekupplung;
- Fig. 8: eine Darstellung ähnlich Fig. 4 eines dritten Ausführungsbeispiels einer erfindungsgemäßen Anhängekupplung;
- Fig. 9: eine Darstellung ähnlich Fig. 5 des dritten Ausführungsbeispiels der erfindungsgemäßen Anhängekupplung;
- Fig. 10: eine Darstellung ähnlich Fig. 4 eines vierten Ausführungsbeispiels einer erfindungsgemäßen Anhängekupplung;
- Fig. 11: eine Schnitt längs Linie 11-11 in Fig. 10;
- Fig. 12: eine Darstellung ähnlich Fig. 4 eines fünften Ausführungsbeispiels einer erfindungsgemäßen Anhängekupplung;
- Fig. 13: eine Darstellung ähnlich Fig. 4 des ersten Ausführungsbeispiels der erfindungsgemäßen Anhängekupplung, versehen mit einem ersten Ausführungsbeispiel eines erfindungsgemäßen Sensorsystems;
- Fig. 14: eine Draufsicht auf eine Schaltungsplatine des in Fig. 13 dargestellten Sensorsystems;
- Fig. 15: einen Schnitt in einer einen teilweisen Längsschnitt durch eine Zug-kugelkupplung, die an der Kupplungskugel gemäß Fig. 13 angreift;
- Fig. 16: einen Schnitt längs Linie 16-16 in Fig. 15;

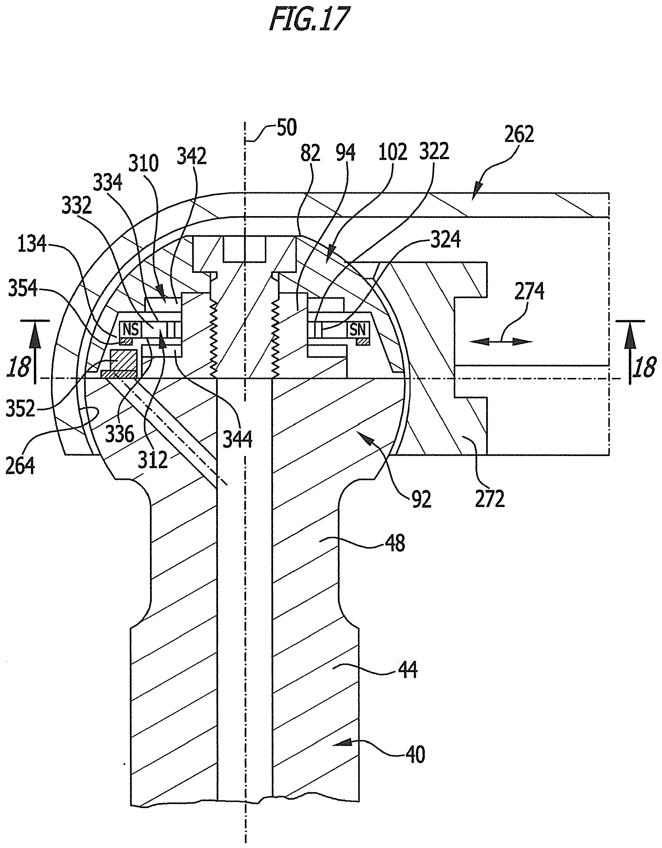

- Fig. 17: einen Schnitt ähnlich Fig. 15 durch das erste Ausführungsbeispiel der erfindungsgemäßen Kupplungskugel und ein zweites Aus-führungsbeispiel eines erfindungsgemäßen Sensorsystems;
- Fig. 18: einen Schnitt längs Linie 18-18 in Fig. 17;
- Fig. 19: einen Schnitt ähnlich Fig. 17 durch das vierte Ausführungsbeispiel der erfindungsgemäßen Anhängekupplung versehen mit einem dritten Ausführungsbeispiel eines erfindungsgemäßen Sensor-systems;
- Fig. 20: einen Schnitt entsprechend Fig. 10 durch das vierte Ausführungsbeispiel der erfindungsgemäßen Anhängekupplung, versehen mit einem vierten Ausführungsbeispiel eines erfindungsgemäßen Sensorsystems und

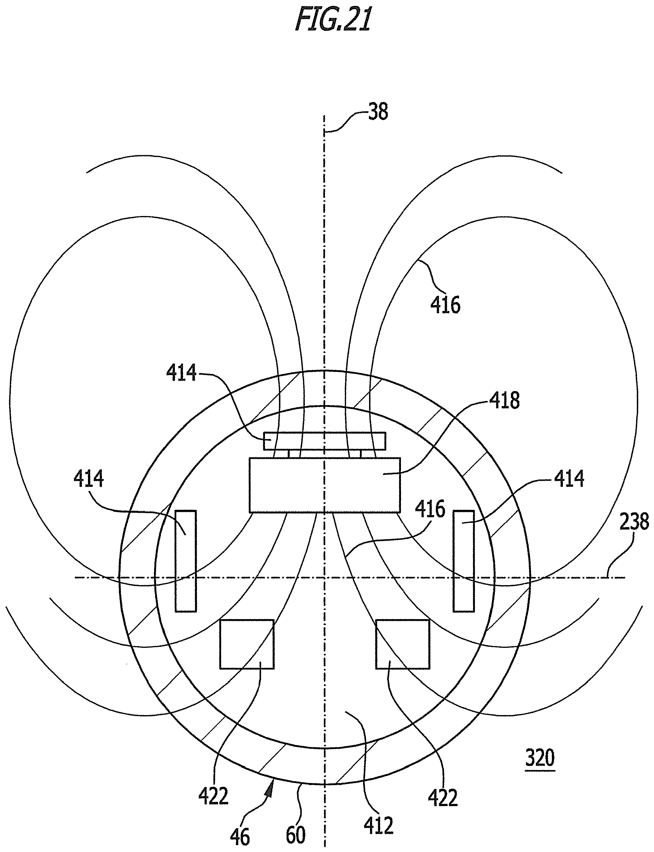

- Fig. 21: einen Schnitt längs Linie 21-21 in Fig. 20.

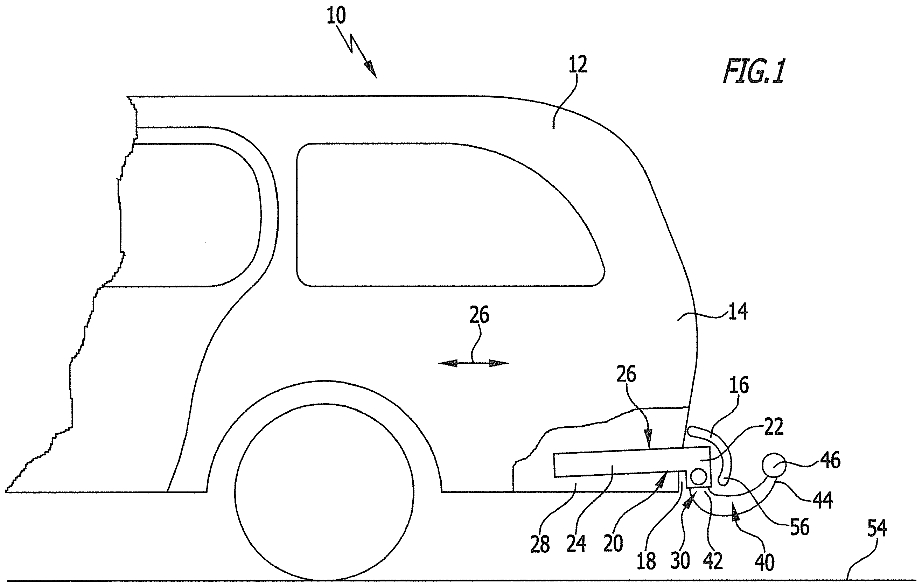

Ein in Fig. 1 dargestelltes und als Ganzes mit 10 bezeichnetes Kraftfahrzeug umfasst eine Kraftfahrzeugkarosserie 12, welche an einem Heckbereich 14 eine Stoßfängereinheit 16 trägt. Von der Stoßfängereinheit 16 überdeckten Rückseite 18 des Heckbereichs 14 und der Stoßfängereinheit 16 ist ein Querträger 22 einer Kupplungsträgereinheit 20 vorgesehen, welcher durch Seitenträger 24 an dem Heckbereich 14 der Kraftfahrzeugkarosserie 12 dadurch fixiert ist, dass sich die Seitenträger 24 parallel zu einer Längsrichtung 26 der Kraftfahrzeugkarosserie 12 erstrecken und in Seitenbereichen 28 des Heckbereichs 14 an diesem fixiert sind.

Die Kupplungsträgereinheit 20 ist ferner mit einer als Ganzes mit 30 bezeichneten Lagereinheit versehen, deren Lagerbasis 32 fest mit dem Querträger 22 verbunden ist.

Die Lagereinheit 30 umfasst ferner ein als Ganzes mit 34 bezeichnetes Lagerelement, welches mit einem ersten Ende 42 eines als Ganzes mit 40 bezeichneten Kugelhalses verbunden ist, der sich von dem ersten Ende 42 bis zu einem zweiten Ende 44 erstreckt und an seinem zweiten Ende 44 eine als Ganzes mit 46 bezeichnete Kupplungskugel trägt.

Das Lagerelement 34 kann beispielsweise ein fest an der Lagerbasis angeordnetes oder abnehmbar an der Lagerbasis 32 montierbares Lagerelement sein.

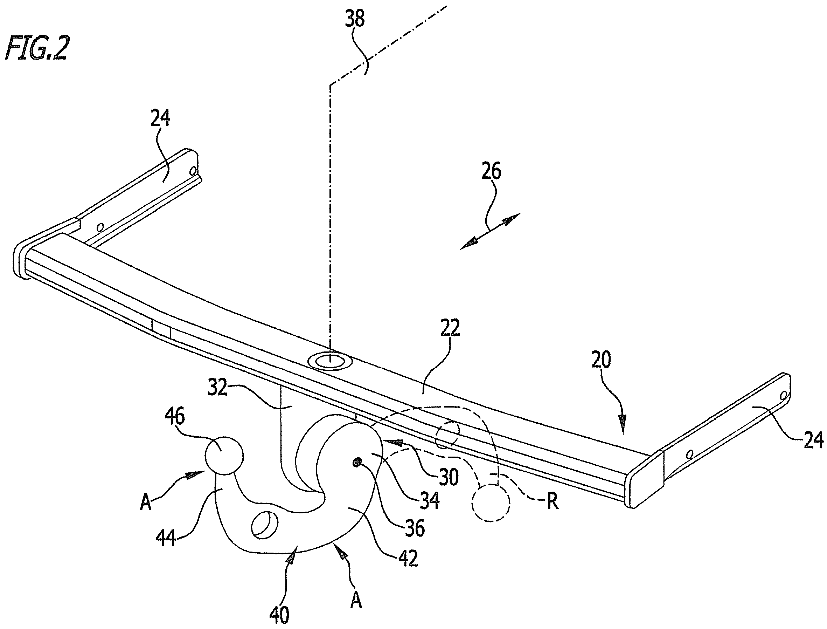

Alternativ dazu kann das Lagerelement 34 jedoch ein Schwenklagerelement sein, welches relativ zur Lagerbasis 32 um eine mit 36 bezeichnete Schwenkachse verschwenkbar ist, so dass der Kugelhals 40 von der in Fig. 2 mit durchzogenen Linien dargestellten Arbeitsstellung A in eine mit gestrichelten Linien dargestellte Ruhestellung R verschwenkbar ist, in welcher sich der Kugelhals 40 ausgehend von der Lagerbasis 32 quer zur Längsrichtung 26 der Kraftfahrzeugkarosserie 12 und damit längs des Querträgers 22 erstreckt.

Damit verläuft der Kugelhals 40 in der gestrichelt dargestellten Ruhestellung R quer zu einer vertikalen Längsmittelebene 38 der Kraftfahrzeugkarosserie 12 und auch der Kupplungsträgereinheit 20, wobei die vertikale Längsmittelebene 38 damit auch parallel zur Längsrichtung 26 verläuft.

Ferner verläuft auch die Schwenkachse 36 vorzugsweise quer zur Längsmittelebene 38, jedoch relativ zur vertikalen Längsmittelebene 38 um einen Winkel geneigt, wobei der Winkel weniger als 70° und mehr als 20° beträgt.

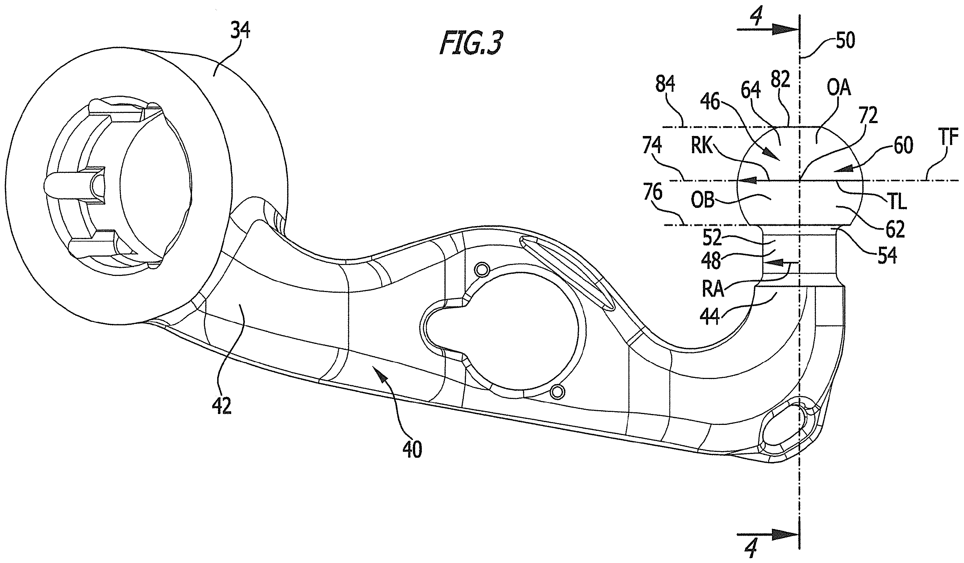

Ein Ausführungsbeispiel eines derartigen Kugelhalses ist vergrößert in Fig. 3 dargestellt, wobei der Kugelhals 40 an dem Lagerelement 34 angeformt ist und das Lagerelement 34 in diesem Fall als Schwenklagerelement zur schwenkbaren Lagerung an der Lagerbasis 32 ausgebildet ist.

Bei dem dargestellten Ausführungsbeispiel des Kugelhalses 40 trägt dieser an seinem zweiten Ende 44 einen Kugelansatz 48, der eine zylindrisch zu einer Kugelmittelachse 50 verlaufende Mantelfläche 52 aufweist, die in einem radialen Abstand RA um die Kugelmittelachse 50 verläuft, der kleiner ist als ein Radius RK der Kupplungskugel 46.

Der Kugelansatz 48 geht dabei in die Kupplungskugel 46 in einem Übergangsbereich 54 über.

Die Kupplungskugel 46 weist keine vollständige Kugeloberfläche auf, sondern eine Oberfläche 60, die gebildet ist aus einer unteren Kugelzone 62 und eine obere Kugelzone 64.

Die untere Kugelzone 62 liegt dabei zwischen einer senkrecht zur Kugelmittelachse 50 und durch einen Kugelmittelpunkt 72 verlaufenden Äquatorialebene 74 und einer parallel zur Äquatorialebene 74 und senkrecht zur Kugelmittelachse 50 verlaufenden und durch die Grenze zwischen dem Übergangsbereich 54 und der Oberfläche 60 der Kupplungskugel 46 festgelegten unteren Begrenzungsebene 76 und stellt den zwischen der Äquatorialebene 74 und der unteren Begrenzungsebene 76 liegenden Oberflächenbereich der Oberfläche 60 der Kupplungskugel 46 dar.

Die obere Kugelzone 64 liegt zwischen der Äquatorialebene 74 und einer senkrecht zur Kugelmittelachse 50 verlaufenden durch eine dem Kugelansatz 48 gegenüberliegende Abflachung 82 der Kupplungskugel 46 festgelegten oberen Begrenzungsebene 84 und stellt somit den zwischen der Äquatorialebene 74 und der oberen Begrenzungsebene liegenden Oberflächenbereich der Oberfläche 60 der Kupplungskugel 46 dar.

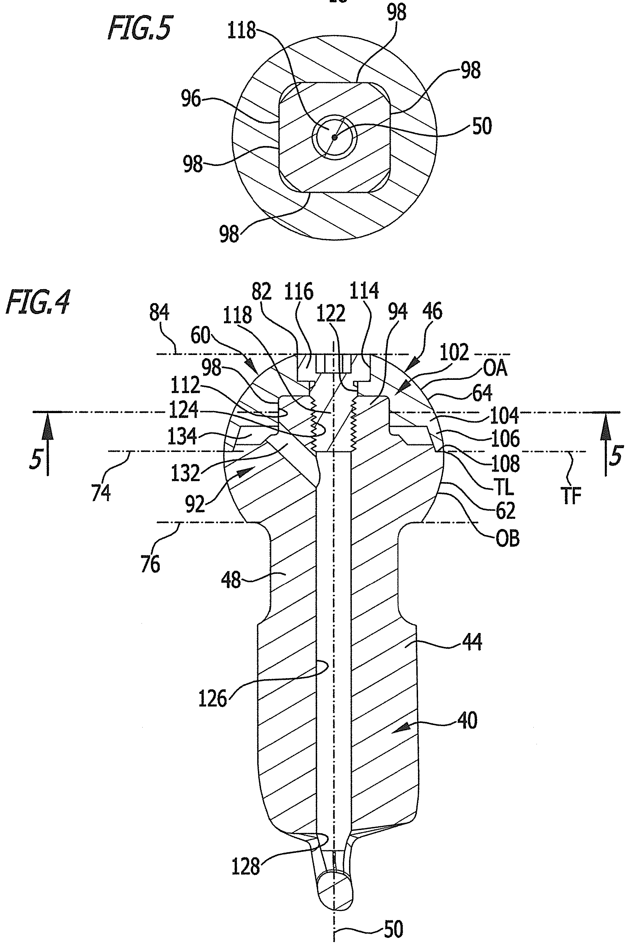

Wie in Fig. 4 dargestellt, ist der Kugelansatz 48 vorzugsweise einstückig an das zweite Ende 44 des Kugelhalses 40 angeformt und an dem Kugelansatz 48 ist auch ein Kugelbasissegment 92 der Kupplungskugel 46 angeformt, wobei das Kugelbasissegment 92 sich ausgehend von dem Kugelansatz 48 erstreckt und ein Segment der Kupplungskugel 46 bildet.

Das Kugelbasissegment 92 wird ergänzt durch ein Kugelabschlusssegment 102, so dass das Kugelbasissegment 92 und das Kugelabschlusssegment 102 sich zur Kupplungskugel 46 ergänzen.

Die Oberfläche 60 der Kupplungskugel 46 wird durch eine Trennlinie TL aufgetrennt in einen von dem Kugelbasissemgent 92 getragenen Oberflächenbereich OB und einen von dem Kugelabschlusssegment 102 getragenen Oberflächenbereich OA, die sich zur Oberfläche 60 der Kupplungskugel 46 ergänzen.

Das Kugelbasissegment 92 erstreckt sich mit seinem Oberflächenbereich OB bis zur Trennlinie TL. Innerhalb der Oberfläche 60 der Kupplungskugel 46 erstreckt sich ein Halteansatz 94 des Kugelbasissegments 92 über die eine durch die Trennlinie TL verlaufende Trennfläche TF hinaus und weist eine zur Kugelmittelachse 50 nicht rotationssymmetrische, jedoch vorzugsweise parallel zu dieser verlaufende Außenkontur 96 auf, die beispielsweise bei dem dargestellten Ausführungsbeispiel mit vier Abflachungen 97 versehen ist, die parallel zur Mittelachse 50 ausgerichtet sind und beispielsweise quer zur Mittelachse 50 dieselbe Ausdehnung aufweisen, so dass der Halteansatz 94 einen bis auf die Ecken ungefähr quadratischen Querschnitt aufweist.

Beispielsweise weist das Kugelabschlusssegment 102 einen das Kugelbasissegment 92 in der Art einer Abdeckkappe übergreifenden und den Oberflächenbereich OA bildenden Abdeckkörper 104 auf, der mit einer unteren Schalenwand 106 auf einem Tragrand 108 des Kugelbasissegments 92 aufsitzt.

Ferner umfasst das Kugelabschlusssegment 102 eine den Halteansatz 94 formschlüssig umgreifende und in den Abdeckkörper 104 eingeformte Halteansatzaufnahme 112, die mit einer Innenkontur 98 an der Außenkontur 96, insbesondere den Abflachungen 97 derselben, formschlüssig anliegt und somit das Kugelabschlusssegment 102 bezüglich der Kugelmittelachse 50 drehfest mit dem Kugelbasissegment 92 verbindet.

Ferner umfasst das Kugelabschlusssegment 102 eine sich ausgehend von der Abflachung 82 in das Kugelabschlusssegment 102 hineinerstreckende Schraubenkopfaufnahme 114, in welcher ein Schraubenkopf 116 einer Halteschraube 118 sitzt, welche einen sich an die Schraubenkopfaufnahme 114 anschließenden Durchbruch 122 durchsetzt und in eine Gewindebohrung 124 im Halteansatz 94 eingeschraubt ist.

Vorzugsweise ist eine beispielsweise koaxial zur Kugelmittelachse 50 verlaufende und in ein Inneres der Kupplungskugel führende Zugangsbohrung 126 vorgesehen, welche das Kugelbasissegment 92, den Kugelansatz 48 und auch das Ende 44 des Kugelhalses 40 durchsetzt und eine der Kupplungskugel 46 gegenüberliegende Austrittsöffnung 128 im Bereich des Kugelhalses 40 aufweist.

Vorzugsweise bildet ein in dem Halteansatz 94 verlaufender Endabschnitt der Zugangsbohrung 126 auch die Gewindebohrung 124.

Von der Zugangsbohrung 126 führt ferner noch ein Kanal 132 zu einem innerhalb des Abdeckkörpers 104 liegenden und sich zwischen dem Kugelbasissegment 92 und dem Kugelabschlusssegment 102 eingeschlossen liegenden Hohlraum 134, welcher ringförmig um die Kugelmittelachse 50 herum verläuft, vorzugsweise auch ringförmig um den Halteansatz 94 herum verläuft und zur Aufnahme eines nachfolgend noch im einzelnen beschriebenen Sensorsystems dient.

Im Zusammenhang mit dem vorstehend beschriebenen Ausführungsbeispiel erfolgt beispielhaft die Aufteilung der Kupplungskugel 46 in das Kugelbasissegment 92 und das Kugelabschlusssegment 102 so, dass der Tragrand 108 in der Äquatorialebene 74 liegt, so dass die Trennlinie TL zwischen dem Tragrand 108 des Kugelbasissegments 92 und der auf diesem aufsitzenden Schalenwand 106 des Kugelabschlusssegments 102 in der Äquatorialebene 74 verläuft.

In diesem Fall umfasst der Oberflächenbereich OB des Kugelbasissegments 92 die untere Kugelzone 62 und der Oberflächenbereich OA des Kugelabdecksegments 102 die obere Kugelzone 64.

Es ist aber auch denkbar, dass der Tragrand 108 im Abstand von der Äquatorialebene 74 beispielsweise zwischen der Äquatorialebene 74 und der oberen Begrenzungsebene 84 liegt, so dass der Oberflächenbereich OB des Kugelbasissegments 92 nicht nur die untere Kugelzone 62, sondern auch noch einen Teilbereich der oberen Kugelzone 64 umfasst, während der Oberflächenbereich OA des Kugelabschlusssegments 102 lediglich einen Teilbereich der oberen Kugelzone 64 umfasst.

Somit ist die Äquatorialebene 74 nicht zwingend notwendigerweise die Trennfläche TF zwischen dem Tragrand 108 und der Schalenwand 106, sondern eine Trennfläche TF zwischen diesen kann auch im Abstand von der Äquatorialebene 74 sowohl in Richtung der unteren Begrenzungsebene 76 als auch der oberen Begrenzungsebene 84 versetzt verlaufen.

Vorzugsweise ist jedoch die Trennfläche TF zwischen dem Tragrand 108 und der Schalenwand 106 relativ zur Äquatorialebene 74 in Richtung der oberen Begrenzungsebene 84 versetzt.

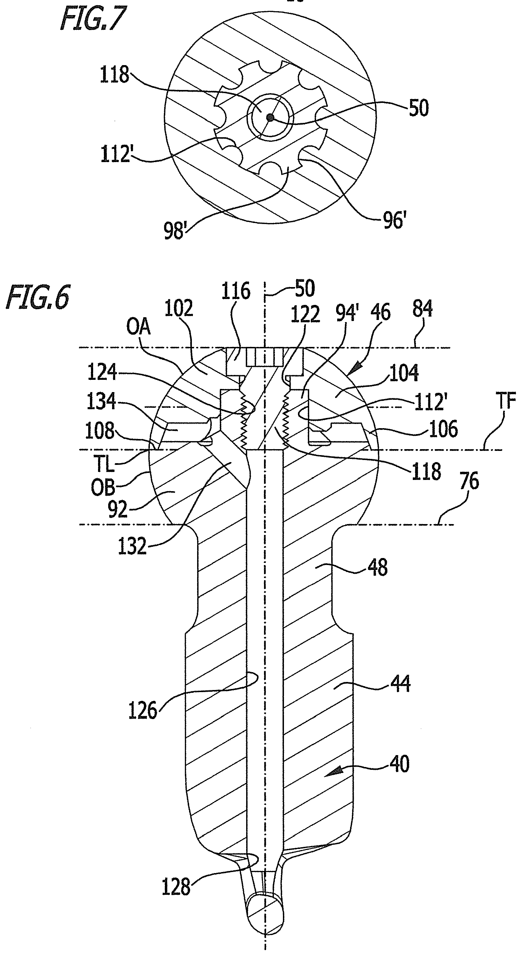

Bei einem zweiten Ausführungsbeispiel einer erfindungsgemäßen Anhängekupplung, dargestellt in Fig. 6 und 7 sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Im Gegensatz zum ersten Ausführungsbeispiel ist bei dem zweiten Ausführungsbeispiel der Halteansatz 94' mit einer Außenkontur 96' versehen, die eine parallel zur Kugelmittelachse 50 verlaufende Umfangsverzahnung mit einzelnen parallel zur Kugelmittelachse 50 verlaufenden Zähnen 97' aufweist, die aufeinanderfolgend um die Kugelmittelachse 50 angeordnet sind.

Diese Umfangsverzahnung 97' greift in eine durch die Innenkontur 98' der Halteansatzaufnahme 112' gebildete Gegenverzahnung formschlüssig ein, so dass sich ebenfalls zwischen dem Halteansatz 94' und der Halteansatzaufnahme 112' eine formschlüssige drehfeste Fixierung des Kugelabschlusssegments 102 bezogen auf das Kugelbasissegment 92 ergibt.

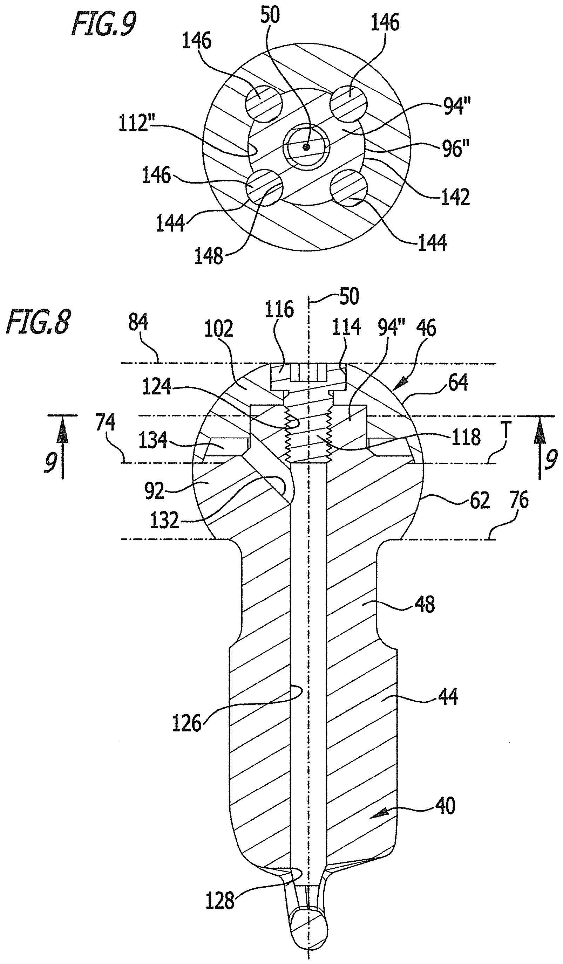

Bei einem dritten Ausführungsbeispiel einer erfindungsgemäßen Anhängekupplung, dargestellt in Fig. 8 und 9, sind in gleicher Weise wie bei den voranstehenden Ausführungsbeispielen dieselben Bezugszeichen verwendet, wie bei dem ersten Ausführungsbeispiel, so dass diesbezüglich auf die Ausführungen zum ersten Ausführungsbeispiel vollinhaltlich Bezug genommen werden kann.

Im Gegensatz zum ersten und zweiten Ausführungsbeispiel hat bei dem dritten Ausführungsbeispiel der Halteansatz 94" des Kugelbasissegments 92 eine Außenkontur 96", die einerseits gebildet ist durch eine zur Kugelmittelachse zylindrische Grundfläche 142 sowie von der zylindrischen Grundfläche 142 abweichende beispielsweise sich radial zur Kugelmittelachse 50 nach außen wölbende Blockierflächen 144, welche Umfangsflächen von Stiftkörpern 146, die sich parallel zur Kugelmittelachse 50 erstrecken und mit einem Teilbereich ihres Umfangs in entsprechenden Vertiefungen 148 des Halteansatzes 94" sitzen und mit einem Teilbereich ihrer Umfangsfläche radial über die zylindrische Grundfläche 142 überstehen, um die Blockierflächen 144 zu bilden.

Dabei ist die Halteansatzaufnahme 112" hinsichtlich ihrer dem Halteansatz 94 zugewandten Innenkontur 98" sowohl an die Grundfläche 142 als auch an die Blockierflächen 144, gebildet durch die Stiftkörper 146, angepasst, so dass sich durch die zwischen dem Halteansatz 94" und der Halteansatzaufnahme 112" sitzenden Stiftkörper 146 ebenfalls eine formschlüssige und bezüglich einer Drehbewegung um die Kugelmittelachse 50 drehfeste Verbindung zwischen dem Kugelbasissegment 92 und dem Kugelabschlusssegment 102 ergibt.

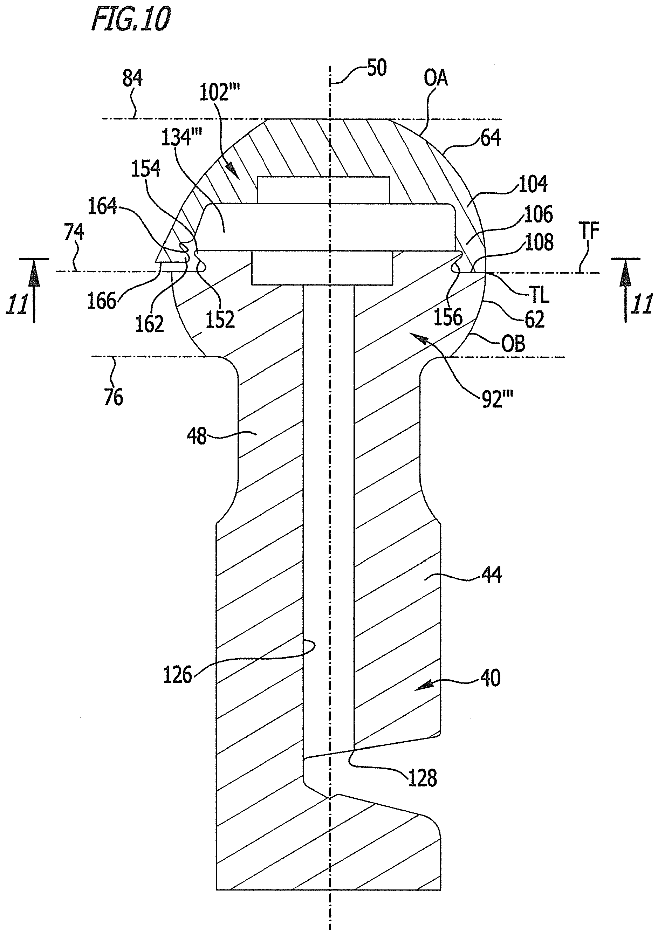

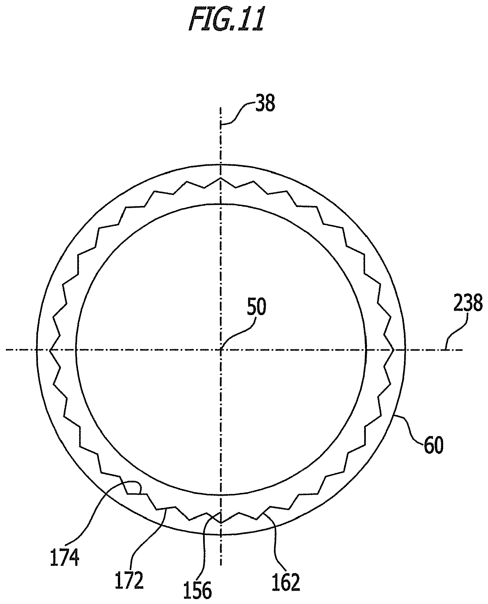

Bei einem vierten Ausführungsbeispiel einer erfindungsgemäßen Anhängekupplung, dargestellt in Fig. 10 und 11 sind ebenfalls diejenigen Teile, die mit denen des voranstehenden Ausführungsbeispiels identisch sind, mit denselben Bezugszeichen versehen, so dass hinsichtlich der Beschreibung vollinhaltlich auf die Ausführungen zum den voranstehenden Ausführungsbeispielen Bezug genommen werden kann.

Im Gegensatz zu den voranstehenden Ausführungsbeispielen ist beim vierten Ausführungsbeispiel das Kugelbasissegment 92 nicht mit einem Halteansatz 94 versehen, sondern mit einer sich an den Tragrand 108 anschließenden Hinterschneidung 152, welche gebildet ist durch einen sich im Abstand vom Tragrand 108 radial nach außen erstreckenden Ringkörper 154 und eine zwischen dem Ringkörper 154 und dem Tragrand 108 liegende bezogen auf die Kugelmittelachse 50 radiale Einschnürung 156, die insbesondere gegenüber dem Ringkörper 154 radial zurückgesetzt ist.

In diese Hinterschneidung 152 greift ein an die Schalenwand 106 angeformter radial zur Kugelmittelachse 50 vorspringender Ringkörper 162 ein, der zwischen einer zur Kugelmittelachse 50 sich nach außen in die Schalenwand 106 hineinerstreckenden umlaufenden Vertiefung 164 und einer auf dem Tragrand 108 aufsitzenden Stützfläche 166 der Schalenwand 106 angeordnet ist.

Die Fixierung des Kugelabschlusssegments 102 an dem Kugelbasissegment 92 erfolgt dabei so, dass wie in Fig. 10 auf der linken Seite dargestellt, die Schalenwand 106 des Kugelabschlusssegments 102 in einem aufgeweiteten Zustand hergestellt wird, in welchem sich das Kugelabschlusssegment 102 mit der Schalenwand 106 derart auf das Kugelbasissegment 92 aufsetzen lässt, dass der Ringkörper 162 an dem Ringkörper 154 in Richtung parallel zur Kugelmittelachse 50 vorbeibewegbar ist und dann durch Umformen der Schalenwand 106, beispielsweise durch Rollen, ein Einformen des Ringkörpers 162 in die Einschnürung 156 mit gleichzeitigem Einformen des Ringkörpers 154 in die Vertiefung 164 erfolgt, so dass durch diesen Umformvorgang in Richtung parallel zur Kugelmittelachse 50 eine feste Verbindung zwischen dem Kugelbasissegment 92 und dem Kugelabschlusssegment 102 herstellbar ist.

Um gleichzeitig eine bezüglich der Kugelmittelachse 50 drehfeste formschlüssige Verbindung zwischen dem Kugelbasissegment 92 und dem Kugelabschlusssegment 102 zu erhalten, ist beispielsweise die Vertiefung 156 mit einer umlaufenden verzahnten Kontur 172 versehen und der Ringkörper 162 mit einer korrespondierenden verzahnten Innenkontur 174, die ineinander eingreifen, so dass dadurch eine bezüglich der Kugelmittelachse 50 drehfeste formschlüssige Verbindung zwischen dem Kugelabschlusssegment 102 und dem Kugelbasissegment 92 herstellbar ist (Fig. 11).

In gleicher Weise könnte aber auch die Vertiefung 164 mit einer Verzahnung versehen sein, in welche der ebenfalls mit einer korrespondierenden Verzahnung versehene Ringkörper 154 eingreift.

Im Fall des vierten Ausführungsbeispiels ergibt sich zwischen dem Kugelbasissegment 92"' und dem Kugelabschlusssegment 102"' ein Hohlraum 134‴, der aufgrund des Fehlens des Halteansatzes 94 kein Ringraum ist, sondern sich jeweils ausgehend von der Mittelachse 50 bis zu der Schalenwand 106 erstreckt.

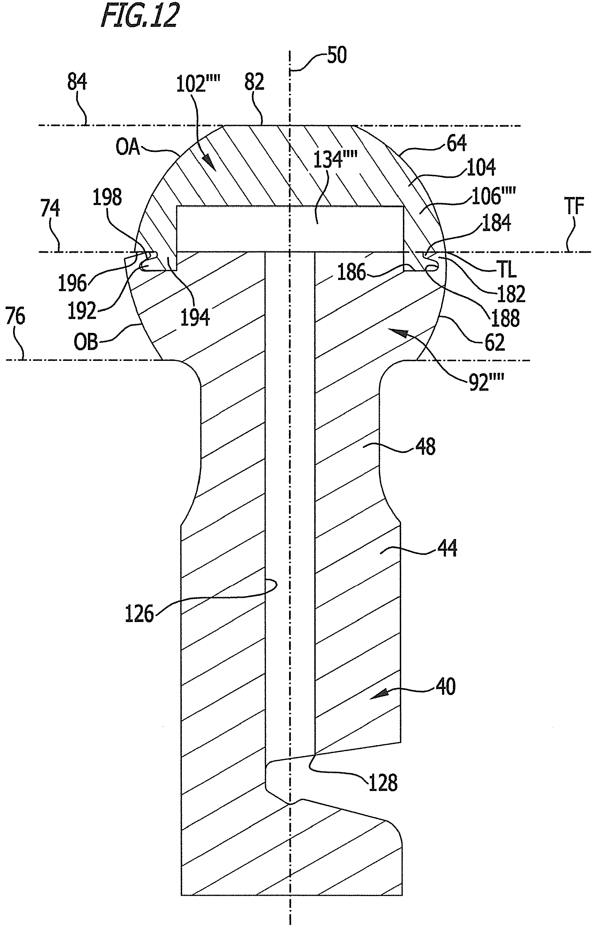

Bei einem fünften Ausführungsbeispiel, dargestellt in Fig. 12 sind ebenfalls diejenigen Teile, die mit denen der voranstehenden Ausführungsbeispiele identisch sind, mit denselben Bezugszeichen versehen, so dass auf die Beschreibung derselben im Zusammenhang mit den voranstehenden Ausführungsbeispielen vollinhaltlich Bezug genommen werden kann.

Bei dem fünften Ausführungsbeispiel ist das Kugelbasissegment 92"" mit einem Stützrand 182 versehen, welcher einen radial in Richtung der Kugelmittelachse 50 vorspringenden Ringkörper 184 aufweist, der im Abstand von einem innerhalb des Stützrandes 182 liegenden Tragrand 186 angeordnet ist, wobei zwischen dem Ringkörper 184 und dem Tragrand 186 eine sich radial zur Kugelmittelachse 50 nach außen erstreckende Vertiefung 188 liegt.

In diese Vertiefung 188 greift wiederum ein sich radial nach außen erstreckender Ringkörper 192 ein, welcher Teil eines Fußbereichs 194 ist, der an die Schalenwand 106 angeformt ist und eine zwischen einer Unterseite 196 der Schalenwand 106"" und dem Ringkörper 192 liegende Einschnürung 198 bildet, in welche der Ringkörper 184 des Stützrands 182 eingreift.

Auch in diesem Fall lässt sich die Verbindung zwischen dem Kugelabschlusssegment 102"" und dem Kugelbasissegment 92"" dadurch herstellen, dass der Stützrand 182 des Kugelbasissegments 92 radial aufgeweitet hergestellt ist, so dass das Kugelabschlusssegment mit dem Fußbereich 192 aufgesetzt werden kann, bis es auf dem Tragrand 186 aufliegt.

Anschließend erfolgt ein Umformen des Stützrandes 182 dergestalt, dass der Ringkörper 192 in die Vertiefung 188 eingreift und der Ringkörper 184 in die Einschnürung 198 eingreift.

Dabei sind entweder der Ringkörper 192 und die Vertiefung 188 und/oder der Ringkörper 184 und die Einschnürung 198 mit verzahnten Konturen 172 bzw. 174 versehen, um gleichzeitig durch das Umformen nicht nur eine in Richtung der Kugelmittelachse 50 wirkende formschlüssige Verbindung zwischen dem Kugelabschlusssegment 102 und dem Kugelbasissegment 92 zu erreichen, sondern gleichzeitig eine formschlüssige bezüglich der Kugelmittelachse 50 drehfeste Verbindung zwischen dem Kugelabschlusssegment 102 und dem Kugelbasissegment 92.

Auch bei dem fünften Ausführungsbeispiel ist der Hohlraum 134"" so ausgebildet, dass dieser sich unmittelbar ausgehend von der Kugelmittelachse 50 in radialer Richtung bis zur Schalenwand 106"" erstreckt.

Ferner mündet in den Hohlraum 134"" in gleicher Weise wie bei den voranstehenden Ausführungsbeispielen die Zugangsbohrung 126, die in diesem Fall lediglich das Kugelbasissegment 92, den Kugelansatz 48 und den Kugelhals 40 im Bereich des zweiten Endes 44 durchsetzt und sich bis zu der Austrittsöffnung 128 im Kugelhals 40 erstreckt.

Bei allen vorstehend beschriebenen Ausführungsbeispielen ist das Kugelabschlusssegment 102 aus einem nicht magnetisierbaren oder nicht ferromagnetischen Material hergestellt.

Insbesondere werden nicht magnetisierbare Edelstahllegierungen eingesetzt, vorzugsweise Legierungen, deren magnetische Permeabilität µ im Bereich von 1 bis 1,3 liegt, noch besser von 1 bis 1,2, vorzugsweise von 1 bis 1,1 und besonders bevorzugt von 1 bis 1,06 liegt. Besonders vorteilhaft ist die Verwendung von Legierungen wie beispielsweise X 2 CrNi 18-9 oder X 5 CrNi 18-10 oder X 8 CrNi S 18-9 oder X 2 CrNiMo 17-12-2 oder X 2 CrNiMo 18-14-3 oder Legierungen gemäß dem Werkstoffnummernsystem für Stähle DIN EN 10027 mit den Werkstoffnummern 1.38xx und 1.39xx.

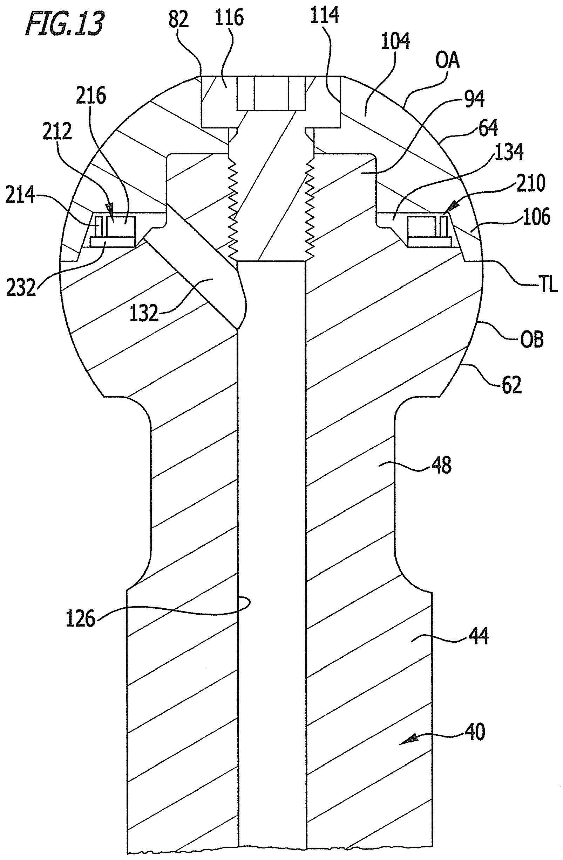

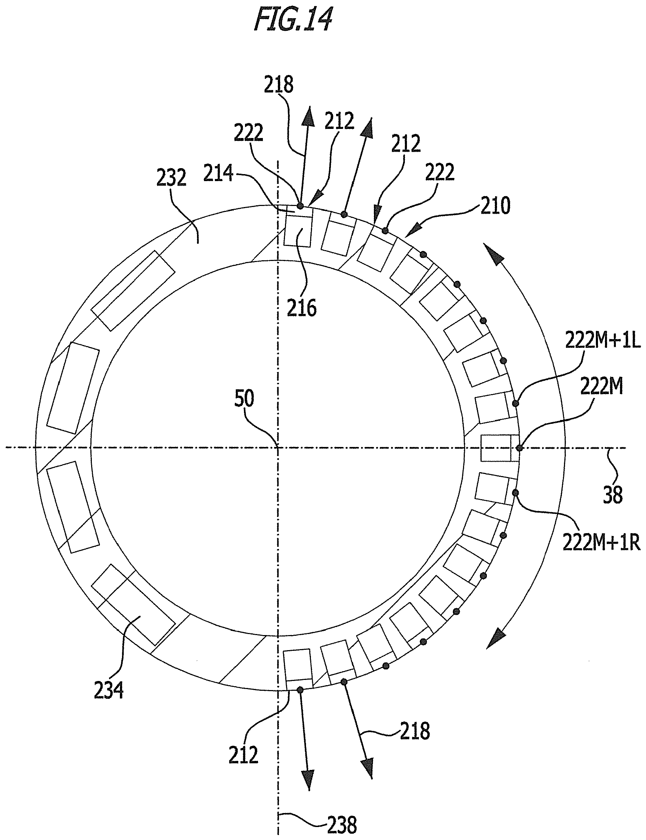

Wie in Fig. 13 dargestellt, ist bei dem ersten Ausführungsbeispiel der erfindungsgemäßen Anhängekupplung in dem Hohlraum 134 beispielsweise ein erstes Sensorsystem 210 vorgesehen, welches, wie in Fig. 14 dargestellt, eine Vielzahl von magnetischen Sensoreinheiten 212 aufweist, wobei jede der Sensoreinheiten 212 einen Magnetfeldsensor 214, beispielsweise einen Hall-Sensor, aufweist, welcher durch einen Permanentmagnet 216 magnetisch durchflutet ist, wobei der Permanentmagnet 216 den Magnetfeldsensor 214 derart magnetisch durchflutet, dass das Magnetfeld eine radial zur Kugelmittelachse 50 verlaufende Detektionsrichtung 218 vorgibt, die einem Detektionsort 222 zugeordnet ist.

Durch die Anordnung der Vielzahl von Sensoreinheiten 212 lässt sich beispielsweise ausgehend von einem in der Längsmittelebene 38 liegenden Detektionsort 222M erfassen, ob in der jeweiligen radial zur Kugelmittelachse 50 verlaufenden Detektionsrichtung an dem jeweiligen Detektionsort eine magnetische Veränderung in der Umgebung eingetreten ist.

Erfolgt beispielsweise eine Annäherung eines magnetisierbaren Körpers an einen der Detektionsorte 222, so wird der Magnetfeldsensor 214 die Veränderung des durch den Permanentmagnet 216 erzeugten und den Magnetfeldsensor 214 durchflutenden Magnetfeldes erfassen.

Zur Vereinfachung der Montage der Einzelsensoren 212 sind diese auf einer gemeinsamen ringförmigen Schaltungsplatine 232 angeordnet und miteinander verschaltet.

Darüber hinaus können auf der Schaltungsplatine 232, beispielsweise in den Bereichen, in denen keine Einzelsensoren 212 notwendig sind, elektronische Baugruppen 234 zur Verarbeitung der Sensorsignale der Sensoreinheiten 212 und auch zum Betrieb und zur Steuerung der Sensoreinheiten 212 angeordnet werden.

In dem in Fig. 14 dargestellten Ausführungsbeispiel sind beispielsweise lediglich die Sensoreinheiten 212 auf einer dem Kraftfahrzeug 10 angewandten Seite einer vertikalen Querebene 238 angeordnet, die senkrecht zur Längsmittelebene 38 verläuft.

Es besteht aber auch die Möglichkeit noch weitere Sensoreinheiten 212 im Anschluss an die Querebene 238 auf einer dem Kraftfahrzeug 10 zugewandten Seite der Querebene 238 vorzusehen.

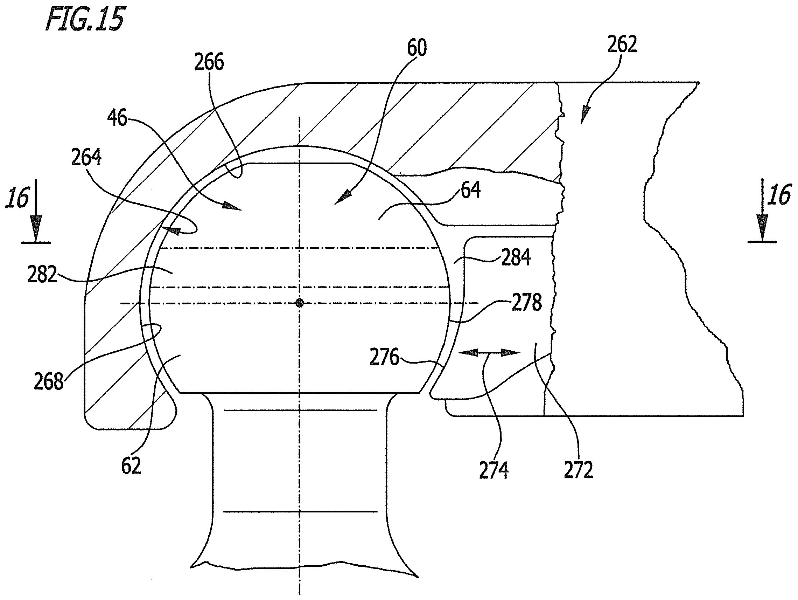

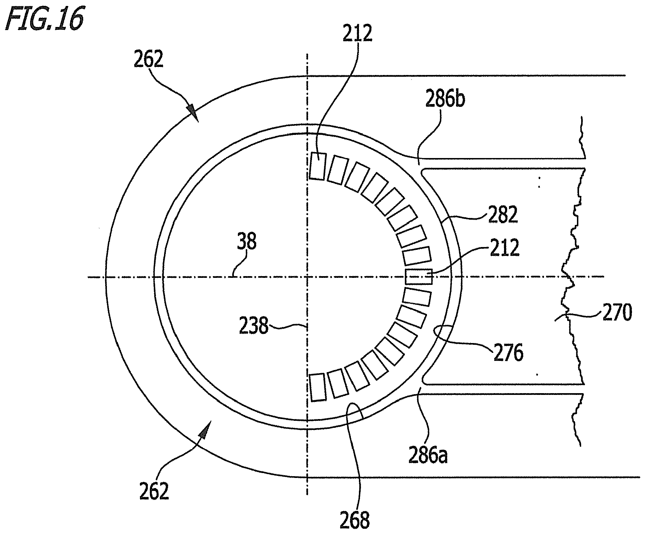

Mit dem ersten Sensorsystem 210 besteht, wie in Fig. 15 und 16 dargestellt, die Möglichkeit, Positionen einer an der Kupplungskugel 46 angreifenden Zugkugelkupplung 262 eines Anhängers zu erfassen.

Eine derartige Zugkugelkupplung 262 weist eine Kugelaufnahme 264 auf, welche einerseits eine Tragpfanne 266 umfasst, die im Bereich der oberen Kugelzone 64 auf der Kupplungskugel 46 aufliegt und außerdem umfasst die Kugelaufnahme 264 noch eine Zugpfanne 268, die an der Kupplungskugel 46 in einem in Zugrichtung vorderen Bereich der Kugelzonen 62 und 64 anliegt, der bei Geradeausfahrt dem Heckbereich 14 der Kraftfahrzeugkarosserie 12 zugewandt ist und bei Kurvenfahrt jedoch in Richtung der vertikalen Querebene 238 wandert.

Außerdem erfolgt die Fixierung der Kugelaufnahme 264 an der Kupplungskugel 46 durch ein relativ zur Kugelaufnahme 264 bewegbares Verschlusselement 272, welches beispielsweise parallel zu einer Bewegungsrichtung 274 auf die Kupplungskugel 46 zu oder von dieser weg bewegbar ist, wobei das Verschlusselement 272 mit einer Anlagefläche 276 zumindest in einem Verschlussanlagebereich 278 an der unteren Kugelzone 62 anlegbar ist, um insgesamt ein Lösen der Kugelaufnahme 264, insbesondere ein Abheben der Kugelaufnahme 264 von der Kupplungskugel 46 zu verhindern.

Dabei erstreckt sich das Verschlusselement 272 vorzugsweise bis in eine vom Sensorsystem 210 überwachte Sensorzone 282, und zwar innerhalb eines Nahbereichs 284 der Sensorzone 282, so dass an den Detektionsorten 222 der Sensorzone 282, wie in Fig. 16 dargestellt, einerseits durch die Kugelaufnahme 264 bedingte Signalwerte von den Sensoreinheiten 212 erfasst werden und andererseits an den dem Verschlusselement 272 zugewandten Detektionsorten 222 Signalwerte bedingt durch das Verschlusselement 272 mit der Anlagefläche 276 erzeugt werden.

Ferner werden Spalte 286 a, b zwischen dem Verschlusselement 272 und der Kugelaufnahme 264 ebenfalls durch die diesen zugewandten Detektionsorte 222 durch die Sensoreinheiten 212 erfasst.

Beispielsweise entspricht das Sensorsystem 210 dem in der europäischen Patentanmeldung Nr. 2 676 820 A1 beschriebenen Sensorsystem 210 mit den ebenfalls in dieser Patentanmeldung beschriebenen Sensoreinheiten, so dass auf die Beschreibung der Anordnung, Ausrichtung und Arbeitsweise dieses Sensorsystems und insbesondere der Auswertung der bei einem derartigen Sensorsystem erhältlichen Signale vollinhaltlich Bezug genommen wird.

Bei einem zweiten, in das erste Ausführungsbeispiel der Anhängekupplung integrierten, insbesondere in dem Hohlraum 134 angeordneten Sensorsystem 310 ist in dem Hohlraum 134 ein frei um eine Drehachse 311, die beispielsweise mit der Kugelmittelachse 50 zusammenfällt, drehbares ringförmiges Drehpositionserfassungselement 312 vorgesehen, welches berührungslos in mindestens einer Drehposition mit der Zugkugelkupplung 262 in Wechselwirkung tritt und dadurch jeder Drehstellung der Zugkugelkupplung 262 relativ zur Kugelmittelachse 50 aufgrund der berührungslosen drehfesten Kopplung mit der Zugkugelkupplung 262 folgt.

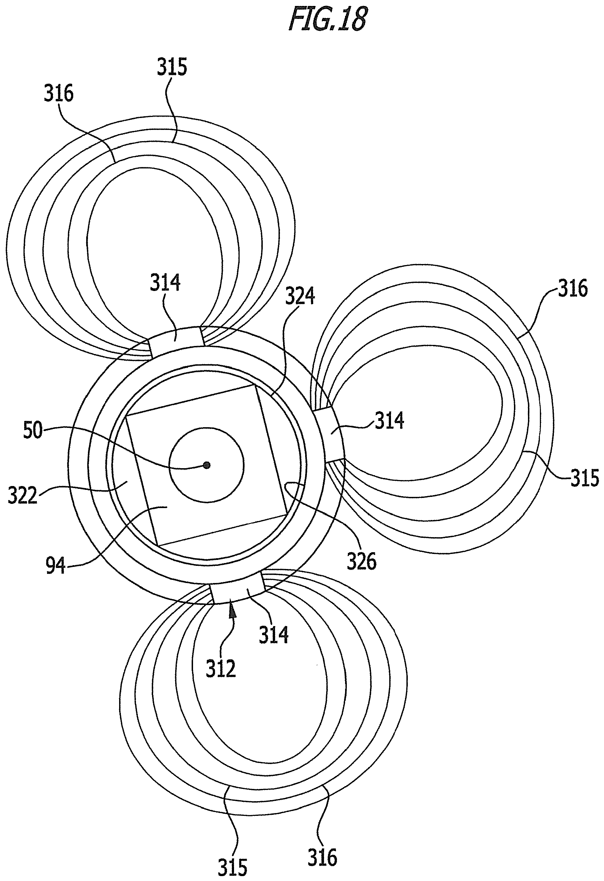

Hierzu ist, wie beispielsweise in Fig. 18 dargestellt, das Drehpositionserfassungselement 312 mit einzelnen Permanentmagneten 314 versehen, die innerhalb von diesen Magnetelementen 314 zugeordneten Erfassungsbereichen 316, welche Magnetfeldlinienverläufe 315, insbesondere mit geschlossenen Feldlinien ausbilden, die sich insbesondere bis in einen Umgebungsraum 320 um die Kupplungskugel 46 erstrecken mit magnetisierbaren Körpern, das heißt mit der üblicherweise aus Stahl hergestellten Kugelaufnahme 264 und dem Verschlusselement 272, berührungslos in eine Wechselwirkung treten und dadurch drehfest an diese ankoppeln.

Vorzugsweise sind die Magnetelemente 314 auf dem ringförmigen Drehpositionserfassungselement 312 derart angeordnet, dass von diesen ausgehend ein bezüglich der Kugelmittelachse 50 nicht rotationssymmetrisches Magnetfeld 318 mit einem in den Erfassungsbereichen 316 geschlossenen Magnetfeldlinienverlauf entsteht, welches bevorzugt in einzelnen definierten Drehorientierungen bezüglich der Kugelmittelachse 50 und somit der Drehachse 311 des Drehpositionserfassungselements 312 an die Zugkugelkupplung 262 ankoppelt.

Zur möglichst reibungsarmen Lagerung des Drehpositionserfassungselements 312 hinsichtlich seiner Drehbarkeit um die Kugelmittelachse 50 umschließt den Halteansatz 94 ein Führungsring 322, welcher eine radial außenliegende Führungsfläche 324 für das ringförmige Drehpositionserfassungselement 312 bildet, wobei das Drehpositionserfassungselement 312 mit einer eigenen Führungsfläche 326 um die Drehachse drehbar an der Führungsfläche 324 gegen Bewegungen in radialer Richtung zur Kugelmittelachse 50, die gleichzeitig die Drehachse darstellt, geführt ist.

Vorzugsweise sind dabei die Führungsflächen 324 und 326 beispielsweise mit reibungsarmen Beschichtungen versehen, die dauerhafte gute Gleiteigenschaften bilden.

Zur axialen Führung des Drehpositionserfassungselements 312 ist das Drehpositionserfassungselement 312 seinerseits mit einem in Richtung parallel zur Kugelmittelachse 50 magnetisierten Ring 332 versehen, so dass beispielsweise in einer oberen Ringfläche 334 ein Magnetpol und in einer gegenüberliegenden unteren Ringfläche 336 der andere Magnetpol liegen.

Diesem magnetisierten Ring 332 gegenüberliegend sind, beispielsweise einerseits in dem Kugelabschlusssegment 102 und andererseits in dem Kugelbasissegment 92 angeordnete, stationäre Magnete 342 und 344 mit gleicher Polung vorgesehen, so dass aufgrund der abstoßenden Wechselwirkung zwischen den Magnetpolen der stationären Magnete 342 und 344 und den Magnetpolen des magnetisierten Rings 332 der magnetisierte Ring 332 frei schwebend zwischen den stationären Magneten 342 und 344 gehalten ist und somit berührungslos in Richtung parallel zur Kugelmittelachse 50 geführt ist.

Zur Abfrage der Drehstellungen des Drehpositionserfassungselements 312 ist an einer Stelle ein Sensor 352 vorgesehen, welcher Positionsmarkierungen 354 auf einer dem Sensor 352 zugewandten Seite des Drehpositionserfassungselements 312 erfasst und daraus die Position des Drehpositionserfassungselements 312, beispielsweise bezogen auf eine Referenzposition, ermittelt.

Aufgrund der drehfesten berührungslosen Kopplung des Drehpositionserfassungselements 312 mit den Drehpositionen der Zugkugelkupplung 362 lässt sich somit über die Erfassung der Drehstellungen des Drehpositionserfassungselements 312 in der Kupplungskugel 46 die Drehposition der Zugkugelkupplung 262 relativ zur Kugelmittelachse 50 ermitteln.

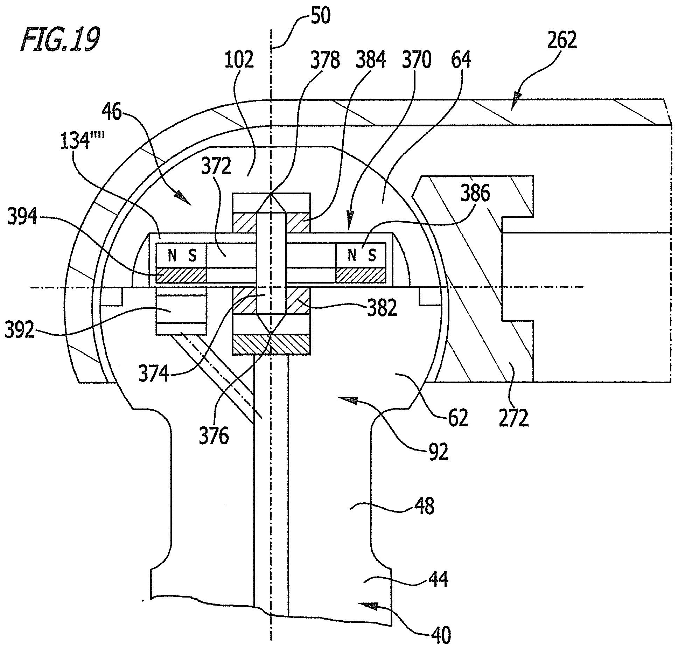

Ein in Fig. 19 dargestelltes Sensorsystem 370 ist in eine Kupplungskugel gemäß dem vierten Ausführungsbeispiel der erfindungsgemäßen Anhängekupplung integriert, wobei der Hohlraum 134"" sich ausgehend von der Kugelmittelachse bis zu der Schalenwand 106 erstreckt.

Auch das Sensorsystem 370 umfasst ein Drehpositionserfassungselement 372, welches reibungsarm drehbar um die Kugelmittelachse 50 als Drehachse gelagert ist.

Hierzu ist das Drehpositionserfassungselement 372 beispielsweise als Scheibenkörper ausgebildet, welcher mit einem zentralen Lagerstift 374 verbunden ist, der mit Lagerspitzen 376 und 378 versehen ist, durch welche eine Lagerung des Lagerstifts 374 und somit auch des Drehpositionserfassungselements 372 gegen eine Bewegung in Richtung parallel zur Drehachse des Drehpositionserfassungselements 372 und somit zur Kugelmittelachse 50 erfolgt.

Ferner ist der Lagerstift 374 entweder bereits durch die Spitzen 376 und 378 oder durch zusätzliche den Lagerstift 374 umfassende Radiallagerflächen 382 und 384 gegen Bewegungen in radialer Richtung zur Kugelmittelachse 50 gelagert.

Das Drehpositionserfassungselement 372 umfasst ebenfalls in gleicher Weise wie beim Sensorsystem 310 vorgesehene Magnetelemente 386, durch welche, wie beim Sensorsystem 310 beschrieben, eine berührungslose drehfeste Kopplung mit der Zugkugelkupplung 262 erfolgt.

Darüber hinaus ist auch dem Drehpositionserfassungselement 372 ein Sensor 392 zugeordnet, welcher die Drehpositionen des Drehpositionserfassungselements 372 relativ zu einer Referenzposition durch Erfassen von dem Sensor 392 zugewandten Positionsmarken 394 erfasst, wie bereits im Zusammenhang mit dem Sensorsystem 310 beschrieben.

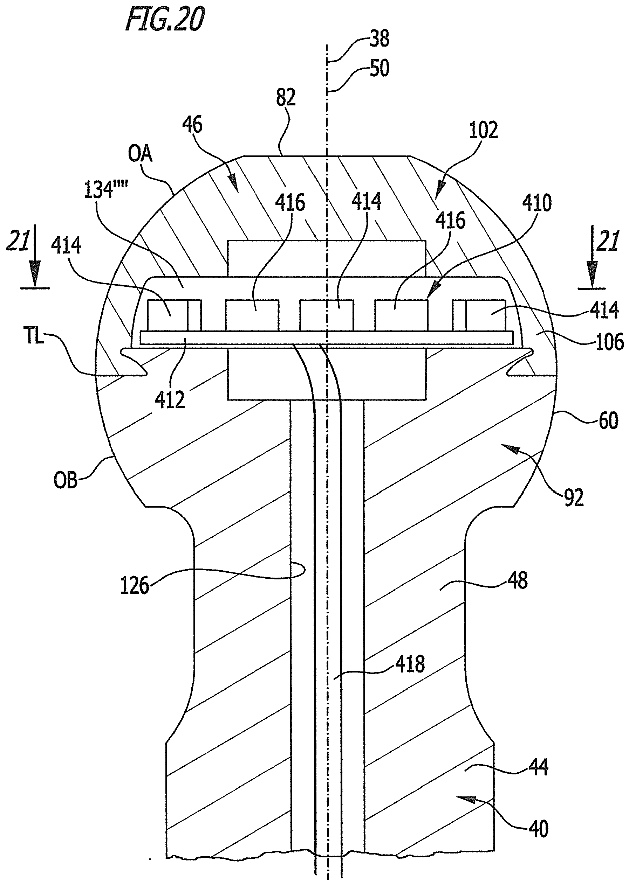

Ein weiteres, in Fig. 20 dargestelltes Sensorsystem ist ebenfalls in eine Anhängekupplung gemäß dem vierten Ausführungsbeispiel integriert, wobei der in der Kupplungskugel 46 gebildete Hohlraum 134 sich ebenfalls von der Kugelmittelachse 50 radial bis zu den Schalenwänden 106 erstreckt.

Das Sensorsystem 410 umfasst dabei als erste Variante eine beispielsweise scheibenförmige Schaltungsplatine 412, auf welcher beispielsweise drei zweidimensionale Magnetfeldsensoren 414 angeordnet sind, die in der Lage sind, in einem zweidimensionalen sich quer zur Mittelachse 50 erstreckenden Flächenbereich vor diesen Magnetfeldsensoren 414 liegende magnetisierbare Elemente zu erfassen, und zwar durch Beeinflussung eines Magnetfeldes 416, das sich ausgehend von mindestens einem oder mehreren Permanentmagneten 418 in den Umgebungsraum 320 um die Kupplungskugel 46 ausbreitet.

Ein in den Umgebungsraum 320 eintretendes magnetisierbares Element, beispielsweise die Zugkugelkupplung 262, beeinflusst das Magnetfeld 416 und ändert dieses hinsichtlich seines Verlaufs in dem zweidimensionalen Flächenbereich in den zwei verschiedenen Raumrichtungen und diese Änderung lässt sich durch den mindestens einen Magnetfeldsensor 414 erfassen.

Sind beispielsweise die zweidimensionalen Magnetfeldsensoren 414 so angeordnet, dass einer auf einer dem Kraftfahrzeug 10 abgewandten Seite der Querebene 238 angeordnet ist und zwei weitere der Magnetfeldsensoren 414 beiderseits der Längsmittelebene 238 beispielsweise nahe der Querebene 238 angeordnet sind, so lässt sich dadurch ebenfalls die Beeinflussung der Magnetfelder 416, durch die an der Kupplungskugel 46 angreifende Zugkugelkupplung 262 erfassen und insbesondere die durch die Zugkugelkupplung 262 erzeugte asymmetrische Beeinflussung der Magnetfelder 416, nämlich einerseits durch die Kugelaufnahme 264 und andererseits durch das Verschlusselement 272 mit den beiderseits desselben liegenden Spalten 286a, 286b, erfassen.

Das Sensorsystem 410 umfasst als zweite Variante auf der beispielsweise scheibenförmigen Schaltungsplatine 412 beispielsweise drei dreidimensionale Magnetfeldsensoren 414, die in der Lage sind, in einem dreidimensionalen Raum vor diesen Magnetfeldsensoren 414 liegende magnetisierbare Elemente zu erfassen, und zwar durch Beeinflussung eines Magnetfeldes 416, das sich ausgehend von mindestens einem oder mehreren Permanentmagneten 418 dreidimensional in den Umgebungsraum 320 um die Kupplungskugel 46 ausbreitet.

Ein in den Umgebungsraum 320 eintretendes magnetisierbares Element, beispielsweise die Zugkugelkupplung 262, beeinflusst das Magnetfeld 416 und ändert dieses hinsichtlich seines räumlichen Verlaufs und seines Betrags in den drei verschiedenen Raumrichtungen und diese Änderung lässt sich durch den mindestens einen Magnetfeldsensor 414 erfassen.

Sind beispielsweise die dreidimensionalen Magnetfeldsensoren 414 so angeordnet, dass einer auf einer dem Kraftfahrzeug 10 abgewandten Seite der Querebene 238 angeordnet ist und zwei weitere der Magnetfeldsensoren 414 beiderseits der Längsmittelebene 238 beispielsweise nahe der Querebene 238 angeordnet sind, so lässt sich dadurch ebenfalls die Beeinflussung des Magnetfeldes 416, durch die an der Kupplungskugel 46 angreifende Zugkugelkupplung 262 erfassen und insbesondere die durch die Zugkugelkupplung 262 erzeugte asymmetrische Beeinflussung des Magnetfeldes 416, nämlich einerseits durch die Kugelaufnahme 264 und andererseits durch das Verschlusselement 272 mit den beiderseits desselben liegenden Spalten 286a, 286b, erfassen.

Das Sensorsystem 410 hat ferner noch den Vorteil, dass sich aufgrund des zur Verfügung stehenden Bauraums auf der Schaltungsplatine 412 auch noch elektronische Baugruppen 422 anordnen lassen, die beispielsweise Prozessoren zum Betrieb der dreidimensionalen Magnetfeldsensoren 414 und/oder zur Auswertung der Signale der dreidimensionalen Magnetfeldsensoren 414 sind, so dass sich vorzugsweise sogar die gesamten, auch für die Signalverarbeitung erforderlichen elektronischen Baugruppen auf der Schaltungsplatine 412 anordnen lassen und somit über eine von der Schaltungsplatine 412 wegführende Leitung 424, die durch die Zentralbohrung 126 direkt Daten zur Drehlage der Zugkugelkupplung 262 relativ zu Kupplungskugel 46 übermitteln lassen.

Diese Lösung hat damit den großen Vorteil, dass keine außerhalb der Kupplungskugel 46 erforderliche Auswerteelektronik vorgesehen werden muss, sondern über die Leitung 424 die Ausgangsdaten zur Drehposition der Zugkugelkupplung 262 relativ zur Kupplungskugel 46 zur Weiterverarbeitung übermittelt werden können.

## Patentansprüche

1. Anhängekupplung für Kraftfahrzeuge umfassend einen Kugelhals (40), eine fahrzeugseitige Lagereinheit (30), mit welcher ein erstes Ende des Kugelhalses (40) verbunden ist, und eine Kupplungskugel (46), welche mit einem zweiten Ende (44) des Kugelhalses (40) verbunden ist und welche einen Hohlraum (134) für ein Sensorsystem (210, 310, 370, 410) aufweist, wobei die Kupplungskugel (46) einen Hohlraum (134"") aufweist in dem ein Sensorsystem (410) angeordnet ist, wobei das Sensorsystem eine Schaltungsplatine (412) umfasst, **dadurch gekennzeichnet, dass** auf der Schaltungsplatine (412) mindestens ein Magnetfeldsensor (414) angeordnet ist, der mehrdimensional in einem außerhalb der Kupplungskugel (46) liegenden Umgebungsraum (320) angeordnete magnetisierbare Teile erfasst, dass in dem Hohlraum (134"") mindestens ein Permanentmagnet (418) angeordnet ist, dessen Magnetfeld den Magnetfeldsensor (414) durchflutet, dass der Magnetfeldsensor (414) ein mehrdimensionaler Magnetfeldsensor (414) ist und dass der Magnetfeldsensor (414) in einem zweidimensionalen, sich in einem quer zur Mittelachse (50) erstreckenden Flächenbereich vor diesem Magnetfeldsensor (414) liegende magnetisierbare Elemente durch Beeinflussung eines Magnetfeldes (416), das sich ausgehend von dem Permanentmagnet (418) in einen Umgebungsraum (320) um die Kupplungskugel (46) ausbreitet und durch ein in den Umgebungsraum (320) eintretendes magnetisierbares Element seinen Verlauf in dem zweidimensionalen Flächenbereich in den zwei verschiedenen Raumrichtungen ändert, aufgrund dieser Änderung erfasst, oder dass der Magnetfeldsensor (414) in einem dreidimensionalen Raum vor diesem Magnetfeldsensor (414) liegende magnetisierbare Elemente durch Beeinflussung eines Magnetfeldes (416), das sich ausgehend von dem Permanentmagnet (418) in den Umgebungsraum (320) um die Kupplungskugel (46) ausbreitet und durch ein in den Umgebungsraum (320) eintretendes magnetisierbares Element seinen räumlichen Verlauf und seinen Betrag in den drei verschiedenen Raumrichtungen ändert, aufgrund dieser Änderung erfasst.

2. Anhängekupplung nach Anspruch 1, **dadurch gekennzeichnet, dass** der Magnetfeldsensor (414) auf einer in dem Hohlraum (134) angeordneten Schaltungsplatine (412) montiert ist und dass auf der Schaltungsplatine (412) elektronische Baugruppen (422) zum Betrieb und zur Signalverarbeitung des mindestens einen Magnetfeldsensors (414) angeordnet sind.

3. Anhängekupplung nach Anspruch 1 oder 2, **dadurch gekennzeichnet, dass** mindestens zwei mehrdimensionale Magnetfeldsensoren (414) vorgesehen sind.

4. Anhängekupplung nach einem der voranstehenden Ansprüche, **dadurch gekennzeichnet, dass** die Kupplungskugel (46) ein Kugelbasissegment (92) aufweist, das über einen Kugelansatz (48) mit dem zweiten Ende (44) des Kugelhalses (40) verbunden ist, und ein auf dem Kugelbasissegment (92) angeordnetes und dieses auf einer dem Kugelansatz (48) abgewandten Seite übergreifendes und somit zur Kupplungskugel (46) ergänzendes Kugelabschlusssegment (102) aufweist, dass innerhalb der Kupplungskugel (46) zwischen dem Kugelbasissegment (92) und dem Kugelabschlusssegment (102) ein Hohlraum (134) vorhanden ist, dass in dem Hohlraum (134) ein Sensorsystem (210, 310, 370, 410) angeordnet ist, welches durch eine durch das Kugelabschlusssegment (102) hindurch erfolgende berührungslose Wechselwirkung mit einer an der Kupplungskugel (46) angreifenden Zugkugelkupplung (262) Drehstellungen der Zugkugelkupplung (262) relativ zu einer Kugelmittelachse (50) der Kupplungskugel (46) erfasst, dass das Kugelabschlusssegment (102) das Kugelbasissegment (92) auf einer dem Kugelansatz (48) abgewandten Seite in der Art einer Kappe übergreift, dass das Kugelbasissegment (92) und das Kugelabschlusssegment (102) miteinander verbundene Formschlusselemente (96, 98, 172, 174) aufweisen, dass die Formschlusselemente (96, 98, 172, 174) das Kugelabschlusssegment (102) bezogen auf eine Drehung um die Kugelmittelachse (50) drehfest relativ zum Kugelbasissegment (92) fixieren, dass die zwischen dem Kugelbasissegment (92) und dem Kugelabschlusssegment (102) wirkenden Formschlusselemente (96, 98, 172, 174) aneinander angreifende Formschlusselemente sind.

5. Anhängekupplung nach Anspruch 4, **dadurch gekennzeichnet, dass** die Kupplungskugel (46) eine geschlossene, frei von Durchbrüchen ausgebildete Oberfläche (60) aufweist, die sich zwischen einer durch den Übergang von der Kupplungskugel (46) zum Kugelansatz (48) definierten unteren Begrenzungsebene (76) der Kupplungskugel (46) und einer durch eine Abflachung (82) der Kupplungskugel (46) definierten oberen Begrenzungsebene (84) der Kupplungskugel (46) erstreckt.

6. Anhängekupplung nach Anspruch 4 oder 5, **dadurch gekennzeichnet, dass** ein durch den Kugelansatz (48) verlaufender Zugangskanal (126) zu dem Hohlraum (134) geführt ist.

7. Anhängekupplung nach einem der Ansprüche 4 bis 6, **dadurch gekennzeichnet, dass** das Kugelbasissegment (92) und der Kugelansatz (48) ein einstückiges Teil bilden.

8. Anhängekupplung nach Anspruch 7, **dadurch gekennzeichnet, dass** das Kugelbasissegment (92), der Kugelansatz (48) und der Kugelhals (40) ein einstückiges Teil bilden.

9. Anhängekupplung nach einem der voranstehenden Ansprüche, **dadurch gekennzeichnet, dass** die Formschlusselemente (96, 98, 172, 174) des Kugelbasissegments (92) und des Kugelabschlusssegments (102) verzahnt ineinandergreifen.

10. Anhängekupplung nach Anspruch 9, **dadurch gekennzeichnet, dass** die Formschlusselemente (96, 98, 172, 174) radial zur Kugelmittelachse (50) verzahnt ineinandergreifen.

11. Anhängekupplung nach einem der Ansprüche 4 bis 10, **dadurch gekennzeichnet, dass** das Kugelbasissegment (92) und das Kugelabschlusssegment (102) durch einen durch Umformen hergestellten Formschluss miteinander verbunden sind.

12. Anhängekupplung nach einem der Ansprüche 4 bis 11, **dadurch gekennzeichnet, dass** der Formschluss zwischen dem Kugelbasissegment (92) und dem Kugelabschlusssegment (102) durch Umformen von mindestens einem von zwei aneinander angrenzenden Bereichen (108, 106) des Kugelbasissegments (92) und des Kugelabschlusssegments (102) erfolgt.

13. Anhängekupplung nach Anspruch 12, **dadurch gekennzeichnet, dass** der Formschluss zwischen dem Kugelbasissegment (92) und dem Kugelabschlusssegment (102) durch Umformen eines Randbereichs (106, 108) des Kugelabschlusssegments (102) oder des Kugelbasissegments (92) erfolgt.

14. Anhängekupplung nach Anspruch 12 oder 13, **dadurch gekennzeichnet, dass** der Randbereich (106, 108) des Kugelbasissegments (92) oder des Kugelabschlusssegments (102) mindestens einen radialen, sich in Richtung der Kugelmittelachse (50) erstreckenden Bereich aufweist, welcher in eine Eintiefung des jeweils anderen Segments (102, 92) eingeformt ist.

15. Anhängekupplung nach einem der Ansprüche 4 bis 14, **dadurch gekennzeichnet, dass** das Kugelabschlusssegment (102) aus einem nicht magnetisierbaren Material ausgebildet ist.

## Claims

1. A trailer coupling for motor vehicles comprising a ball neck (40), a vehicle-side bearing unit (30), with which a first end of the ball neck (40) is connected, and a coupling ball (46), which is connected with a second end (44) of the ball neck (40) and which has a cavity (134) for a sensor system (210, 310, 370, 410),
wherein the coupling ball (46) has a cavity (134"") in which a sensor system (410) is arranged, wherein the sensor system comprises a circuit board (412), **characterised in that** there is arranged on the circuit board (412) at least one magnetic field sensor (414), which detects in a multi-dimensional manner magnetisable parts which are arranged in a surrounding space (320) lying outside the coupling ball (46), **in that** there is arranged in the cavity (134"") at least one permanent magnet (418), the magnetic field of which permeates the magnetic field sensor (414), **in that** the magnetic field sensor (414) is a multi-dimensional magnetic field sensor (414) and **in that** the magnetic field sensor (414) detects magnetisable elements lying in a two-dimensional surface region in front of this magnetic field sensor (414) and extending transversely to the central axis (50) by influencing a magnetic field (416), which spreads out from the permanent magnet (418) into a surrounding space (320) around the coupling ball (46) and, due to a magnetisable element entering into the surrounding space (320), changes its course in the two-dimensional surface region in the two differing spatial directions, the magnetic field sensor detects the magnetisable element on the basis of this change, or **in that** the magnetic field sensor (414) detects magnetisable elements lying in a three-dimensional space in front of this magnetic field sensor (414) by influencing a magnetic field (416), which spreads out from the permanent magnet (418) into the surrounding space (320) around the coupling ball (46) and, due to a magnetisable element entering into the surrounding space (320), changes its spatial course and its magnitude in the three different spatial directions, the magnetic field sensor detects the magnetisable element on the basis of this change.

2. A trailer coupling according to Claim 1, **characterised in that** the magnetic field sensor (414) is mounted on a circuit board (412) arranged in the cavity (134) and **in that** there are arranged on the circuit board (412) electronic assemblies (422) for the operation and for the signal processing of the at least one magnetic field sensor (414).

3. A trailer coupling according to Claim 1 or 2, **characterised in that** there are provided at least two multi-dimensional magnetic field sensors (414).

4. A trailer coupling according to any one of the preceding claims, **characterised in that** the coupling ball (46) has a ball base segment (92), that is connected with the second end (44) of the ball neck (40) by means of a ball formation (48), and has a ball-terminating segment (102) which is arranged on the ball base segment (92) and engages over this at a side remote from the ball formation (48) and thus complementing the coupling ball (46), **in that** there is provided a cavity (134) within the coupling ball (46) between the ball base segment (92) and the ball-terminating segment (102), **in that** there is arranged in the cavity (134) a sensor system (210, 310, 370, 410), which, by means of a contactless interaction with a ball coupling (262) engaging with a coupling ball (46) occurring through the ball-terminating segment (102), detects rotary positions of the ball coupling (262) relative to a ball central axis (50) of the coupling ball (46), **in that** the ball-terminating segment (102) engages over the ball base segment (92) on a side remote from the ball formation (48) in the manner of a cap, **in that** the ball base segment (92) and the ball-terminating segment (102) have positive-locking elements (96, 98, 172, 174) connected to each other, **in that** the positive-locking elements (96, 98, 172, 174), based on a rotation around the ball central axis (50), fix the ball-terminating segment (102) against rotation relative to the ball base segment (92), **in that** the positive-locking elements (96, 98, 172, 174), which act between the ball base segment (92) and the ball-terminating segments (102), are positive-locking elements which engage in one another.

5. A trailer coupling according to Claim 4, **characterised in that** the coupling ball (46) has a closed surface (60) constructed to be free of openings, the surface extending between a lower limiting plane (76) of the coupling ball (46), which is defined by the transition of the coupling ball (46) to the coupling formation (48), and an upper limiting plane (84) of the coupling ball (46) defined by a flat portion (82) of the coupling ball (46).

6. A trailer coupling according to Claim 4 or 5, **characterised in that** an access channel (126) running through the ball formation (48) is routed to the cavity (134).

7. A trailer coupling according to any one of Claims 4 to 6, **characterised in that** the ball base segment (92) and the ball formation (48) form a one-piece part.

8. A trailer coupling according to Claim 7, **characterised in that** the ball base segment (92) the ball formation (48) and the ball neck (40) form a one-piece part.

9. A trailer coupling according to any one of the preceding claims, **characterised in that** the positive-locking elements (96, 98, 172, 174) of the ball base segment (92) and the ball-terminating segment (102) engage in to each other in toothed manner.

10. A trailer coupling according to Claim 9, **characterised in that** the positive-locking elements (96, 98, 172, 174) engage into each other in toothed manner radially to the ball central axis (50).

11. A trailer coupling according to any one of Claims 4 to 10, **characterised in that** the ball base segment (92) and the ball-terminating segment (102) are connected to each other by a positive-locking arrangement produced by reshaping.

12. A trailer coupling according to any one of Claims 4 to 11, **characterised in that** the positive-locking arrangement between the ball base segment (92) and the ball-terminating segment (102) results from reshaping of at least one of two mutually adjacent regions (108, 106) of the ball base segment (92) and the ball-terminating segment (102).

13. A trailer coupling according to Claim 12, **characterised in that** the positive-locking arrangement between the ball base segment (92) and the ball-terminating segment (102) results from reshaping an edge region (106, 108) of the ball-terminating segment (102) or the ball base segment (92).

14. A trailer coupling according to Claim 12 or 13, **characterised in that** the edge region (106, 108) of the ball base segment (92) or the ball-terminating segment (102) has at least one radial region extending in the direction of the ball central axis (50) and being formed into a recess of the respective other segment (102, 92).

15. A trailer coupling according to any one of Claims 4 to 14, **characterised in that** the ball-terminating segment (102) is made from a non-magnetisable material.

## Revendications

1. Attelage de remorque pour véhicules à moteur comprenant un col porte-boule (40), une unité d'appui (30) côté véhicule, à laquelle une première extrémité du col porte-boule (40) est reliée, et une boule d'attelage (46), laquelle est reliée à une deuxième extrémité (44) du col porte-boule (40) et laquelle présente une cavité (134) pour un système de capteur (210, 310, 370, 410),
dans lequel la boule d'attelage (46) présente une cavité (134ʺʺ) dans laquelle est disposé un système de capteur (410), dans lequel le système de capteur comprend une carte de circuit (412), **caractérisé en ce qu'**au moins un capteur de champ magnétique (414) est disposé sur la carte de circuit (412), qui détecte de manière multidimensionnelle des parties magnétisables disposées dans un espace environnant (320) situé à l'extérieur de la boule d'attelage (46), qu'au moins un aimant permanent (418) est disposé dans la cavité (134ʺʺ), dont le champ magnétique s'écoule à travers le capteur de champ magnétique (414), que le capteur de champ magnétique (414) est un capteur de champ magnétique (414) multidimensionnel et que le capteur de champ magnétique (414) détecte, dans une zone de surface bidimensionnelle s'étendant dans un transversalement par rapport à l'axe médian (50) des éléments magnétisables situés devant ce capteur de champ magnétique (414) du fait de l'influence d'un champ magnétique (416), qui se déploie à partir de l'aimant permanent (418) dans un espace environnant (320) autour de la boule d'attelage (46) et modifie son tracé dans la zone de surface bidimensionnelle dans les deux directions spatiales différentes par le biais d'un élément magnétisable entrant dans l'espace environnant (320), en raison de cette modification, ou que le capteur de champ magnétique (414) détecte dans un espace tridimensionnel des éléments magnétisables situés devant ce capteur de champ magnétique (414) du fait de l'influence d'un champ magnétique (416), qui se déploie à partir de l'aimant permanent (418) dans l'espace environnant (320) autour de la boule d'attelage (46) et par le biais d'un élément magnétisable entrant dans l'espace environnant (320) modifie son tracé spatial et sa valeur dans les trois directions spatiales différentes, en raison de cette modification.

2. Attelage de remorque selon la revendication 1, **caractérisé en ce que** le capteur de champ magnétique (414) est monté sur une carte de circuit (412) disposée dans la cavité (134) et que des modules électroniques (422) pour le fonctionnement et pour le traitement de signal du au moins un capteur de champ magnétique (414) sont disposés sur la carte de circuit (412).

3. Attelage de remorque selon la revendication 1 ou 2, **caractérisé en ce qu'**au moins deux capteurs de champ magnétique (414) multidimensionnels sont prévus.

4. Attelage de remorque selon l'une quelconque des revendications précédentes, **caractérisé en ce que** la boule d'attelage (46) présente un segment de base de boule (92), qui est relié à la deuxième extrémité (44) du col porte-boule (40) par l'intermédiaire d'un talon de boule (48), et présente un segment de terminaison de boule (102) disposé sur le segment de base de boule (92) et recouvrant celui-ci sur une face opposée au talon de boule (48) et donc complémentaire de la boule d'attelage (46), qu'une cavité (134) est présente à l'intérieur de la boule d'attelage (46) entre le segment de base de boule (92) et le segment de terminaison de boule (102), qu'un système de capteur (210, 310, 370, 410) est disposé dans la cavité (134), lequel détecte par le biais d'une interaction sans contact s'effectuant à travers le segment de terminaison de boule (102) avec un attelage à boule de traction (262) agissant sur la boule d'attelage (46) des positions de rotation de l'attelage à boule de traction (262) par rapport à un axe central de boule (50) de la boule d'attelage (46), que le segment de terminaison de boule (102) recouvre le segment de base de boule (92) sur une face opposée au talon de boule (48) à la façon d'un capuchon, que le segment de base de boule (92) et le segment de terminaison de boule (102) présentent des éléments de complémentarité de forme (96, 98, 172, 174) reliés les uns aux autres, que les éléments de complémentarité de forme (96, 98, 172, 174) fixent le segment de terminaison de boule (102) de manière solidaire en rotation relativement au segment de base de boule (92) par rapport à une rotation autour de l'axe central de boule (50), que les éléments de complémentarité de forme (96, 98, 172, 174) agissant entre le segment de base de boule (92) et le segment de terminaison de boule (102) sont des éléments de complémentarité de forme agissant les uns sur les autres.

5. Attelage de remorque selon la revendication 4, **caractérisé en ce que** la boule d'attelage (46) présente une surface (60) fermée, réalisée de manière exempte de percées, qui s'étend entre un plan de délimitation inférieur (76) de la boule d'attelage (46) défini par le passage de la boule d'attelage (46) au talon de boule (48) et un plan de délimitation supérieur (84) de la boule d'attelage (46) défini par un méplat (82) de la boule d'attelage (46).

6. Attelage de remorque selon la revendication 4 ou 5, **caractérisé en ce qu'**un canal d'accès (126) s'étendant à travers le talon de boule (48) est guidé vers la cavité (134) .

7. Attelage de remorque selon l'une quelconque des revendications 4 à 6, **caractérisé en ce que** le segment de base de boule (92) et le talon de boule (48) forment une partie d'une seule pièce.

8. Attelage de remorque selon la revendication 7, **caractérisé en ce que** le segment de base de boule (92), le talon de boule (48) et le col porte-boule (40) forment une partie d'une seule pièce.

9. Attelage de remorque selon l'une quelconque des revendications précédentes, **caractérisé en ce que** les éléments de complémentarité de forme (96, 98, 172, 174) du segment de base de boule (92) et du segment de terminaison de boule (102) s'engrènent de manière dentée.

10. Attelage de remorque selon la revendication 9, **caractérisé en ce que** les éléments de complémentarité de forme (96, 98, 172, 174) s'engrènent de manière dentée radialement par rapport à l'axe central de boule (50).

11. Attelage de remorque selon l'une quelconque des revendications 4 à 10, **caractérisé en ce que** le segment de base de boule (92) et le segment de terminaison de boule (102) sont reliés l'un à l'autre par une complémentarité de formes établie par formage.

12. Attelage de remorque selon l'une quelconque des revendications 4 à 11, **caractérisé en ce que** la complémentarité de formes entre le segment de base de boule (92) et le segment de terminaison de boule (102) s'effectue par formage d'au moins une de deux zones (108, 106) adjacentes l'une à l'autre du segment de base de boule (92) et du segment de terminaison de boule (102).

13. Attelage de remorque selon la revendication 12, **caractérisé en ce que** la complémentarité de formes entre le segment de base de boule (92) et le segment de terminaison de boule (102) s'effectue par formage d'une zone de bord (106, 108) du segment de terminaison de boule (102) ou du segment de base de boule (92).

14. Attelage de remorque selon la revendication 12 ou 13, **caractérisé en ce que** la zone de bord (106, 108) du segment de base de boule (92) ou du segment de terminaison de boule (102) présente au moins une zone radiale s'étendant en direction de l'axe central de boule (50), laquelle est évidée dans un creusement de l'autre segment (102, 92) respectif.

15. Attelage de remorque selon l'une quelconque des revendications 4 à 14, **caractérisé en ce que** le segment de terminaison de boule (102) est réalisé à partir d'un matériau non magnétisable.
